# EUROPEAN PATENT APPLICATION

(11) **EP 4 825 692 A1**
(43) Date of publication of application: **21.10.2026**
(21) Application number: 25801852.2
(22) Date of filing: 28.02.2025
(51) Int. Cl.: B60W 40/09, B60W 60/00, B60W 50/00

(54) **DRIVING STYLE IDENTIFICATION METHOD AND APPARATUS, DATA PROCESSING METHOD AND APPARATUS, AND DEVICE**

(71) Applicant: SZ Zhuoyu Technology Co., Ltd., Shenzhen, Guangdong 518055 (CN)
(72) Inventor: MA, Lu, Shenzhen, Guangdong 518055 (CN); CHEN, Xiaozhi, Shenzhen, Guangdong 518055 (CN); WANG, Halfbullet, Shenzhen, Guangdong 518055 (CN); LI, Peiliang, Shenzhen, Guangdong 518055 (CN); HUANG, Jensen, Shenzhen, Guangdong 518055 (CN); JING, Xin, Shenzhen, Guangdong 518055 (CN)
(74) Representative: Bandpay & Greuter
(86) International application number: PCT/CN2025/079700
(87) International publication number: WO 2026/178816

(57) **Abstract**

The present application provides a driving style identification method, a data processing method, apparatuses, and devices, which are related to intelligent driving technologies. The method includes: a target driving style of a current user may be identified from multiple driving styles based on historical driving behavior data of the current user, and the autonomous mobile device may be controlled to drive according to the target driving style, and driving environment information and navigation information acquired during a movement. The multiple driving styles are obtained based on a cluster analysis of driving behavior data of multiple users. Through the above method, accurate identification and personalized adaptation of a user's driving style may be achieved, so as to improve a user experience.

## Description

### TECHNICAL FIELD

The present application relates to the field of intelligent driving technologies, and in particular, to a driving style identification method, a data processing method, apparatuses and devices.

### BACKGROUND

Users can drive autonomous mobile devices. Different users usually have different driving styles.

In related technologies, autonomous mobile devices are typically equipped with intelligent driving systems. During driving, an autonomous mobile device may drive according to a general driving style in the intelligent driving system. For example, for an intelligent driving vehicle, a set following distance in the general driving style may be 3 meters.

However, in the above manner, the general driving style cannot match a user's personal driving style well, resulting in a poor user experience.

### SUMMARY

The present application provides a driving style identification method, a data processing method, apparatuses and devices, so as to solve the problem that the general driving style in the prior art cannot well match the user's personal driving style, resulting in a poor user experience.

In a first aspect, the present application provides a driving style identification method, which is applied to an autonomous mobile device, the method including:
identifying, based on historical driving behavior data of a current user, a target driving style of the current user from multiple driving styles, where the multiple driving styles are obtained based on a cluster analysis of driving behavior data of multiple users;
controlling, according to the target driving style, and driving environment information and navigation information acquired during a movement, the autonomous mobile device to drive.

In a possible implementation, the identifying, based on the historical driving behavior data of the current user, the target driving style of the current user from the multiple driving styles includes:
determining, according to the historical driving behavior data, a historical feature vector;
acquiring driving feature vectors respectively corresponding to the multiple driving styles;
performing, according to the historical feature vectors, matching processing among the driving feature vectors respectively corresponding to the multiple driving styles to determine the target driving style.

In a possible implementation, the determining, according to the historical driving behavior data, the historical feature vector includes:
performing, based on a preset quantitative indicator and/or a preset feature processing model, feature extraction on the historical driving behavior data to obtain the historical feature vector;
where the preset quantitative indicator is determined based on driving behaviors of the multiple users in at least one driving scenario of cutting in, starting and stopping, congestion, vehicle following, or turning; where the preset feature processing model is used to perform feature extraction on driving behavior data of a user to obtain a feature vector.

In a possible implementation, the performing, based on the preset quantitative indicator and/or the preset feature processing model, feature extraction on the historical driving behavior data to obtain the historical feature vector includes:
performing, based on the preset quantitative indicator, feature extraction on the historical driving behavior data to obtain a first historical feature vector, and determining the first historical feature vector as the historical feature vector; or,
performing, based on the preset feature processing model, feature extraction on the historical driving behavior data to obtain a second historical feature vector, and determining the second historical feature vector as the historical feature vector; or,
performing, based on the preset quantitative indicator, feature extraction on the historical driving behavior data to obtain a first historical feature vector; performing, based on the preset feature processing model, the feature extraction on the historical driving behavior data to obtain a second historical feature vector; and performing concatenation processing on the first historical feature vector and the second historical feature vector to obtain the historical feature vector.

In a possible implementation, the controlling, according to the target driving style , and the driving environment information and the navigation information acquired during the movement, the autonomous mobile device to drive includes:
configuring the target driving style in an intelligent driving model of the autonomous mobile device;
processing the driving environment information and the navigation information through the intelligent driving model to obtain a driving decision solution;
controlling, according to the driving decision solution, the autonomous mobile device to drive;
where the driving decision solution includes at least one of driving route planning, cutting in processing, lane change timing selection, a following distance, a turning speed, or a start-up time interval with a preceding autonomous mobile device.

In a possible implementation, the driving environment information includes motion state information of the autonomous mobile device, motion states of surrounding traffic participants, and road traffic information; and/or
the navigation information includes map information, location information of the autonomous mobile device, and path trajectory information.

In a possible implementation, the method further includes:
receiving the multiple driving styles sent by a server;
displaying the multiple driving styles in a visualization interface of the autonomous mobile device.

In a possible implementation, the method further includes:
receiving a style description of each driving style sent by the server;
accordingly, the displaying the multiple driving styles in the visualization interface of the autonomous mobile device includes:
   displaying the multiple driving styles and the style description corresponding to each driving style in the visual interface of the autonomous mobile device.

In a possible implementation, the method further includes:
receiving a style description report of the current user sent by a server; where the style description report includes at least one of: an overtaking probability, traffic efficiency, an acceleration frequency, a lane change frequency, driving smoothness, an average speed, a relative driving indicator, or a personality trait;
in response to a first uploading operation of the current user, uploading the style description report of the current user to a shared cloud platform, where the shared cloud platform is used for interaction between users of a plurality of autonomous mobile devices.

In a possible implementation, the method further includes:
in response to a second uploading operation of the current user, uploading operation information of the target driving style to a shared cloud platform, where the operation information includes the target driving style and at least one of the following: kilometers traveled, average energy consumption, and operation time for the target driving style.

In a possible implementation, the method further includes:
controlling the autonomous mobile device to drive according to a new driving style downloaded by the current user from the shared cloud platform, the driving environment information and the navigation information acquired during the movement, and the new driving style.

In a second aspect, the present application provides a data processing method for a driving style, the method including:
acquiring driving behavior data of multiple users;
performing a cluster analysis on the driving behavior data of the multiple users to obtain at least one cluster;
respectively adding corresponding driving styles to the at least one cluster to determine multiple driving styles;
sending the multiple driving styles to at least one autonomous mobile device.

In a possible implementation, the performing the cluster analysis on the driving behavior data of the multiple users to obtain at least one cluster includes:
for each user, acquiring, according to the driving behavior data of the user, a feature vector corresponding to the user, where the feature vector includes at least one piece of data related to a driving style;
performing the cluster analysis on feature vectors of the plurality users to obtain the at least one cluster.
In a possible implementation, the driving style corresponding to any cluster has a corresponding style description, and the style description is used to interpret the driving style;
where the sending the multiple driving styles to the at least one autonomous mobile device includes:
   sending the multiple driving styles and the style description corresponding to each driving style to the at least one autonomous mobile device.

In a possible implementation, the method further includes:
acquiring driving behavior data of a current user sent by the autonomous mobile device;
determining, based on a preset quantitative indicator, a relative driving indicator of the current user according to the driving behavior data of the multiple users and the driving behavior data of the current user, where the relative driving indicator is used to represent a ranking of the current user among the multiple users;
where the preset quantitative indicator is determined based on a driving behavior of the user in at least one driving scenario of cutting in, starting and stopping, congestion, vehicle following, or turning.

In a possible implementation, the method further includes:
acquiring target personality traits corresponding to the multiple driving styles;
adding a target personality trait corresponding to each driving style to the style description corresponding to the driving style.

In a possible implementation, the method further includes:
establishing, according to personality traits and driving styles of the multiple users, a style mapping relationship, where the style mapping relationship includes the target personality trait corresponding to each driving style, and the target personality trait is a personality trait that appears most frequently among users corresponding to the driving style;
accordingly, the acquiring the target personality traits corresponding to the multiple driving styles includes:
   querying and acquiring the target personality trait corresponding to each driving style based on the style mapping relationship.

In a possible implementation, the method further includes:
determining, based on a target driving style of the current user and the style mapping relationship, a style description report corresponding to the target driving style of the current user, where the style description report includes at least one of: an overtaking probability, traffic efficiency, an acceleration frequency, a lane change frequency, driving smoothness, an average speed, a relative driving indicator, or a personality trait;
sending the style description report of the current user to the autonomous mobile device.

In a third aspect, the present application provides a driving style identification apparatus, including:
a first acquiring module, configured to identify, based on historical driving behavior data of a current user, a target driving style of the current user from multiple driving styles, where the multiple driving styles are obtained based on a cluster analysis of driving behavior data of multiple users;
a first processing module, configured to control, according to the target driving style, and driving environment information and navigation information acquired during a movement, the autonomous mobile device to drive.

In a fourth aspect, the present application provides a data processing apparatus for a driving style, including:
a second acquiring module, configured to acquire driving behavior data of multiple users;
an analyzing module, configured to perform a cluster analysis on the driving behavior data of the multiple users to obtain at least one cluster;
a second processing module, configured to add corresponding driving style labels to the at least one cluster respectively to determine multiple driving styles;
a sending module, configured to send the multiple driving styles to at least one autonomous mobile device.

In a fifth aspect, the present application provides an electronic device, including: a processor, a memory, and a communication interface;
the memory stores computer executable instructions;
the processor executes the computer executable instructions stored in the memory to implement the method according to any one of the first aspect.

In a sixth aspect, the present application provides an autonomous mobile device, including: the electronic device as described in the fifth aspect.

In a seventh aspect, the present application provides a server, including: a processor, a memory, and a communication interface;
the memory stores computer executable instructions;
the processor executes the computer executable instructions stored in the memory to implement the method according to any one of the second aspect.

In an eighth aspect, the present application provides a computer readable storage medium, having computer executable instructions stored therein, where the computer executable instructions, when executed by a processor, are used to implement the method according to any one of the above first aspect or second aspect.

In a ninth aspect, the present application provides a program product, including: a computer program which, when run on a computer, causes the computer to execute the method according to any one of the above first aspect or second aspect.

In a tenth aspect, the present application provides a computer program, where the computer program, when executed by a processor, is used to execute the method according to any one of the above first aspect or second aspect.

The present application provides a driving style identification method, a data processing method, apparatuses, and devices. Include: identifying, based on historical driving behavior data of a current user, a target driving style of the current user from multiple driving styles, where the multiple driving styles are obtained based on a cluster analysis of driving behavior data of multiple users. Then, the autonomous mobile device may be controlled to drive according to the target driving style and driving environment information and navigation information acquired during a movement. In the above process, the target driving style suitable for the current user may be identified by analyzing the historical driving behavior data of the current user, thereby providing a more personalized driving experience and improving a user experience.

### BRIEF DESCRIPTION OF DRAWINGS

The accompanying drawings here are incorporated into the specification and constitute a part of this specification, showing embodiments that comply with the present application, and are used to explain the principle of the present application together with the specification.
FIG. 1 is a schematic diagram of an application scenario provided by an embodiment of the present application.
FIG. 2 is a schematic flow diagram of a first embodiment of a driving style identification method provided by the present application.
FIG. 3 is a schematic flow diagram of a second embodiment of a driving style identification method provided by the present application.
FIG. 4 is a block diagram of a logic for determining a driving decision provided by an embodiment of the present application.
FIG. 5 is a schematic flow diagram of a first embodiment of a data processing method for a driving style provided by the present application.
FIG. 6 is a schematic flow diagram of a second embodiment of a data processing method for a driving style provided by the present application.
FIG. 7 is a schematic diagram of a clustering result provided by an embodiment of the present application.
FIG. 8 is a schematic flow diagram of a third embodiment of a data processing method for a driving style provided by the present application.
FIG. 9 is a schematic flow diagram of a fourth embodiment of a data processing method for a driving style provided by the present application.
FIG. 10 is a schematic flow diagram of a fifth embodiment of a data processing method for driving styles provided by the present application.
FIG. 11 is a schematic flow diagram of a sixth embodiment of a data processing method for driving styles provided by the present application.
FIG. 12 is a schematic flow diagram of a third embodiment of a driving style identification method provided by the present application.
FIG. 13 is a schematic flow diagram of a fourth embodiment of a driving style identification method provided by the present application.
FIG. 14 is a schematic structural diagram of a first embodiment of a driving style identification apparatus provided by the present application.
FIG. 15 is a schematic structural diagram of a second embodiment of a driving style identification apparatus provided by the present application.
FIG. 16 is a schematic structural diagram of a first embodiment of a data processing apparatus for a driving style provided by the present application.
FIG. 17 is a schematic structural diagram of a second embodiment of a data processing apparatus for a driving style provided by the present application.
FIG. 18 is a schematic structural diagram of an electronic device provided by an embodiment of the present application.
FIG. 19 is a schematic structural diagram of a server provided by an embodiment of the present application.

### DETAILED DESCRIPTION

In the embodiments of the present application, the term "and/or" is merely describing an association relationship of associated objects, which represents that there may be three relationships. For example, A and/or B may represent three conditions: A exists alone, A and B exist at the same time, and B exists alone. The character "/" generally represents that the associated objects before and after the character are in an "or" relationship.

In the embodiments of the present application, the term "multiple" refers to two or more than two, and other quantifiers are similar.

It should be noted that user information (including but not limited to user device information, user personal information, etc.) and data (including but not limited to data used for analysis, stored data, displayed data, etc.) involved in one or more embodiments of the present application are all information and data authorized by a user or fully authorized by all parties. And the collection, using and processing of relevant data must comply with relevant laws, regulations and standards, and corresponding operation entrances are provided for users to select to authorize or refuse.

To make the purposes, technical solutions and advantages of embodiments of the present application more clearly, the technical solutions in the embodiments of the present application are clearly and completely described in the following with reference to the accompanying drawings of the embodiments of the present application. Obviously, the described embodiments are merely part of embodiments of the present application, not all embodiments. Based on the embodiments of the present application, all other embodiments obtained by those skilled in the art without creative efforts are all within the protection scope of the present application.

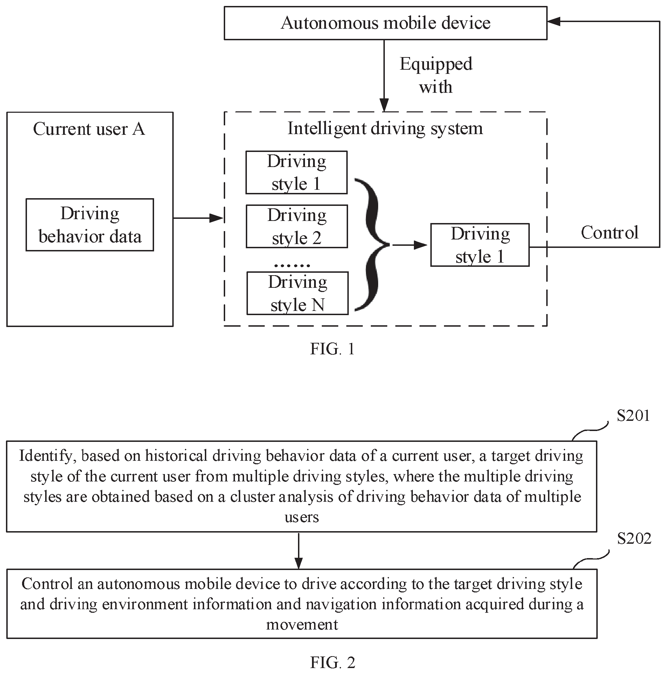

FIG. 1 is a schematic diagram of an application scenario provided by an embodiment of the present application. Referring to FIG. 1, an autonomous mobile device may be equipped with an intelligent driving system. Based on historical driving behavior data of a current user, the autonomous mobile device may identify a target driving style of the current user from multiple driving styles obtained based on a cluster analysis of driving behavior data of multiple users, and control the autonomous mobile device to drive according to the target driving style.

Optionally, the autonomous mobile device may be a flying car, an intelligent driving vehicle, a mobile robot, an intelligent ship, or other devices that are mobile and equipped with an intelligent driving system.

For example, the intelligent driving vehicle may be equipped with an assisted driving system. The intelligent driving vehicle may identify the target driving style of the current user A as a driving style 1 from the driving style 1, a driving style 2, ..., and a driving style N through the driving behavior data of the current user A, and control the intelligent driving vehicle to drive according to the driving style 1.

In related technologies, during driving, an autonomous mobile device equipped with an intelligent driving system drives according to a general driving style pre-set in the intelligent driving system. For example, the device drives at a set following distance of 3 meters. However, the general driving style cannot match a user's personal driving style well, resulting in a poor user experience.

To address the above problems, during research on how to identify the user's personal driving style, the inventors discover the autonomous mobile device may typically record the historical driving behavior data of a user during a history of the user driving the autonomous mobile device. This historical driving behavior data can effectively reflect a user's driving preference for the autonomous mobile device. For example, the historical driving behavior data may reflect that some users' driving styles tend to be sporty, enabling passing through a section of road efficiently, while others tend to be comfortable, enabling smooth acceleration and deceleration, thus relaxing passengers in the vehicle. Therefore, driving according to the general driving style set in the intelligent driving system often fails to meet a user's driving requirement. Based on this, after multiple experiments, the inventors discovers that the target driving style of a current driver may be identified, based on the historical driving behavior data of the current user, from the multiple driving styles obtained based on the cluster analysis of the driving behavior data of the multiple users. Furthermore, the autonomous mobile device may be controlled to drive according to the target driving style and driving environment information and navigation information acquired during a movement to meet the user's driving requirement. Based on this, the present application proposes a driving style identification method to solve the problem that the general driving style cannot match the user's personal driving style well, resulting in the poor user experience.

The technical solutions of the present application and how the technical solutions of the present application solve the above technical problem are illustrated in detail below with specific embodiments. The following specific embodiments may be combined with each other, and the same or similar concepts or processes may not be repeated in some embodiments. Embodiments of the present application will be described below with reference to the accompanying drawings.

FIG. 2 is a schematic flow diagram of a first embodiment of a driving style identification method provided by the present application. Referring to FIG. 2, the method is applied to an autonomous mobile device and includes:
S201, identify, based on historical driving behavior data of a current user, a target driving style of the current user from multiple driving styles, where the multiple driving styles are obtained based on a cluster analysis of driving behavior data of multiple users.

The executive entity of the embodiment of the present application may be an electronic device, or a driving style identification apparatus set in the electronic device. The driving style identification apparatus may be implemented via software or a combination of software and hardware. The driving style identification apparatus may be a processor within the electronic device. For ease of understanding, in the following description, the electronic device is used as an example of the executive entity for illustration, and the electronic device may be a control unit in the autonomous mobile device.

In this step, the electronic device may acquire the historical driving behavior data of the current user, and identify, based on the historical driving behavior data, the target driving style of the current user from the multiple driving styles obtained from the cluster analysis of the driving behavior data of the multiple users. In a specific implementation, a historical feature vector may be determined according to the historical driving behavior data of the current user, driving feature vectors respectively corresponding to the multiple driving styles may be acquired, and the target driving style may be determined by performing a matching among the driving feature vectors respectively corresponding to the multiple driving styles based on the historical feature vector.

For ease of understanding, an intelligent driving vehicle is used as an example of the autonomous mobile device for illustration in the following.

Optionally, the driving behavior data may include training data for training an end-to-end system. The end-to-end system can perform imitation learning on the training data, and thus, can output a driving decision according to information such as an image and a point cloud. The end-to-end system may be an autonomous driving system or an assisted driving system with an intelligent driving model.

Specifically, the driving behavior data may include at least one of: speed data, an acceleration and deceleration pattern, turning behavior, a braking habit, driving time and road condition, fuel consumption data, a driving route, a driving event, and an environmental condition. This data may be collected through on-board sensors and smart devices.

For example, based on the cluster analysis of the driving behavior data of the multiple users, a clustering result of three driving styles may be obtained, namely a driving style 1, a driving style 2, and a driving style 3, where the driving style 1 corresponds to a driving feature vector 1, the driving style 2 corresponds to a driving feature vector 2, and the driving style 3 corresponds to a driving feature vector 3; a historical feature vector A may be determined according to the historical driving behavior data of the current user, and a matching is performed between the historical feature vector A and the driving feature vectors respectively corresponding to the three driving styles to determine that the target driving style is the driving style 1.

S202, control, according to the target driving style and driving environment information and navigation information acquired during a movement, the autonomous mobile device to drive.

In this step, the electronic device may control, according to the identified target driving style combined with the driving environment information and the navigation information acquired by the autonomous mobile device during the driving, the autonomous mobile device to drive in accordance with the target driving style.

In an optional embodiment, the identified target driving style may be configured in an intelligent driving model of the autonomous mobile device, the driving environment information and the navigation information acquired by the autonomous mobile device during the driving are processed by the intelligent driving model to obtain a driving decision solution, and then the driving of the autonomous mobile device is controlled according to the driving decision solution.

Optionally, the target driving style may be configured in the intelligent driving model of the autonomous mobile device by any of the following manners.

Manner 1: in response to a selecting operation of the current user in a visual interface of the autonomous mobile device. For example, the electronic device may configure the identified driving style 1 into the intelligent driving model of the intelligent driving vehicle, in response to the selecting operation of a user A in a human-computer interaction interface of the intelligent driving vehicle.

Manner 2: in response to a voice command of the current user. For example, the electronic device may configure the identified driving style 1 into the intelligent driving model of the intelligent driving vehicle, in response to the voice command "Apply my personalized driving style" of the current user.

The driving environment information may include motion state information (speed, direction, etc.) of the autonomous mobile device, motion states (speed, direction, etc.) of surrounding traffic participants, and road traffic information (traffic light, speed limit, traffic flow, etc.).

The navigation information may include map information, location information of the autonomous mobile device, path trajectory information, and navigation trajectory information.

The driving decision solution may include, but is not limited to, at least one of driving route planning, cutting in processing, lane change timing selection, a following distance, a turning speed, or a start-up time interval with a preceding autonomous mobile device.

For example, the electronic device may configure the driving style 1 into the intelligent driving model of the intelligent driving vehicle, process, through the intelligent driving model, the driving environment information and the navigation information acquired by the intelligent driving vehicle during driving to obtain the driving decision solution. The driving decision solution may include cutting in processing, and then the electronic device may control the autonomous mobile device to drive according to the driving decision solution. For example, for a cut-in vehicle which does not follow traffic rules, the intelligent vehicle, after integrating the driving environment information and the navigation information, may accelerate to increase a safe distance with the cut-in vehicle, ensuring safety of the cut-in vehicle and the intelligent vehicle.

In an embodiment of the present application, an electronic device may identify a target driving style of a current user from multiple driving styles by analyzing historical driving behavior data of the current user. These driving styles are obtained based on a cluster analysis of driving behavior data of multiple users. Subsequently, an autonomous mobile device may be controlled to drive according to the target driving style and driving environment information and navigation information acquired during a movement. In the above process, the target driving style of the current user may be identified based on the historical driving behavior data of the current user, thereby providing a more personalized driving experience for the current user and improving a user experience.

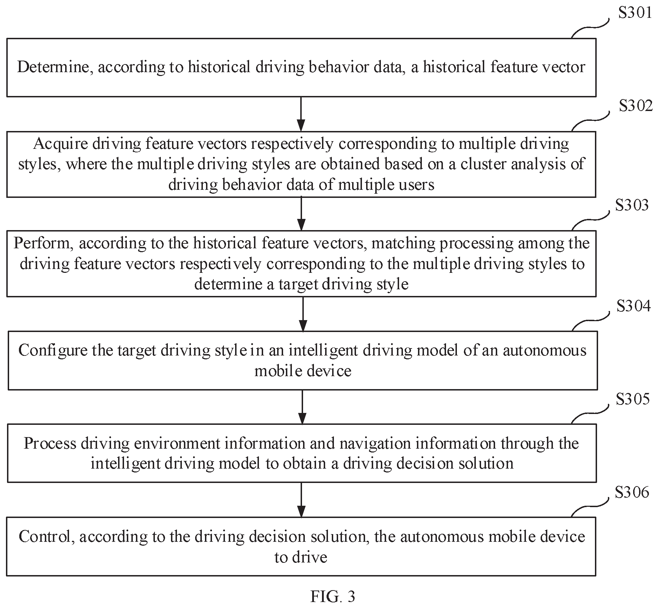

On the basis of the embodiment shown in FIG. 2, the above driving style identification method will be further described in detail below in conjunction with FIG. 3.

FIG. 3 is a schematic flow diagram of a second embodiment of a driving style identification method provided by the present application. Referring to FIG. 3, the method may include:
S301, determine, according to historical driving behavior data, a historical feature vector.

In this step, an electronic device may extract the historical feature vector from the historical driving behavior data of a current user according to the acquired historical driving behavior data of the current user.

In an optional embodiment, feature extraction may be performed on the historical driving behavior data based on a preset quantitative indicator and/or a preset feature processing model to obtain the historical feature vector;
where the preset quantitative indicator is determined based on driving behaviors of the multiple users in at least one driving scenario of cutting in, starting and stopping, congestion, vehicle following, or turning; where the preset feature processing model is used to extract a feature from the driving behavior data of the user to obtain a feature vector.

Specifically, the preset quantitative indicator may be formulated through an expert scoring system, combined with an analysis of a driving scenario by engineering technical personnel. For some key scenarios such as cutting in, starting and stopping, congestion, vehicle following, and turning, corresponding numerical indicators may be formulated. For example, in a cutting in scenario, attention may be paid to a closest distance between the intelligent driving vehicle (the ego vehicle) and other vehicles in a game; in a starting and stopping scenario, attention may be paid to how soon the ego vehicle begins to move after a preceding vehicle starts.

Specifically, the preset feature processing model may be a pre-trained deep learning model or artificial intelligence (Artificial Intelligence, AI) model.

Optionally, it is possible to perform feature extraction on the historical driving behavior data based on the preset quantitative indicator to obtain a first historical feature vector, and determine the first historical feature vector as the historical feature vector; or,
perform feature extraction on the historical driving behavior data based on the preset feature processing model to obtain a second historical feature vector, and determine the second historical feature vector as the historical feature vector; or,
perform feature extraction on the historical driving behavior data based on the preset quantitative indicator to obtain a first historical feature vector, perform feature extraction on the historical driving behavior data based on the preset feature processing model to obtain a second historical feature vector, and perform concatenation processing on the first historical feature vector and the second historical feature vector to obtain the historical feature vector.

For example, feature extraction may be performed on the historical driving behavior data based on the preset quantitative indicator to obtain the first historical feature vector, feature extraction may be performed on the historical driving behavior data based on the preset feature processing model to obtain the second historical feature vector. The first historical feature vector and the second historical feature vector may contain different feature sets to analyze and understand the user's driving behavior from different perspectives. Then the first historical feature vector and the second historical feature vector can be concatenated to obtain the historical feature vector.

Exemplarily, the first historical feature vector may include a speed feature, a turning feature, a braking feature, a vehicle distance keeping feature, and a time feature; where the speed feature may include an average speed, a maximum speed, and a frequency of acceleration and deceleration; the turning feature may include a frequency of change of turning angle, and a speed when turning; the braking feature may include a frequency of braking using and a braking force; the vehicle distance keeping may include an average distance to a preceding vehicle and a closest distance to other vehicles; the time feature may include a driving time period (such as peak hours, night driving, etc.), a driving time, and how soon the ego vehicle begins to move after the preceding vehicle starts.

Specifically, for a user 1, based on a preset quantitative indicator, feature extraction may be performed on the historical driving behavior data of the user 1 to obtain a first historical feature vector. The first historical feature vector may include the vehicle distance keeping feature and the time feature. The vehicle distance keeping feature may be determined based on a preset quantitative indicator 1, and the time feature may be determined based on a preset quantitative indicator 2. The preset quantitative indicator 1 may be based on the closest distance between the intelligent driving vehicle of interest and other vehicles in a game in the cutting in scenario, so that the vehicle distance keeping feature may be extracted from the historical driving behavior data of the user 1. The vehicle distance keeping feature may be that the closest distance to other vehicles is 0.3m. The preset quantitative indicator 2 may be based on how soon the ego vehicle begins to move after the preceding vehicle of interest starts in a starting and stopping scenario, so that the time feature may be extracted from the historical driving behavior data of the user 1. The time feature may be that the ego vehicle also starts moving 2s after the preceding vehicle starts.

Exemplarily, the second historical feature vector may include a behavioral pattern, an environment response feature, and a fuel consumption feature; where the behavioral pattern may include a number and condition of sudden acceleration and sudden braking, the environment response feature may include a driving adjustment for different weather conditions (such as a rainy day and a snowy day), and the fuel consumption feature may include average fuel consumption and changes in fuel consumption under different driving conditions.

Specifically, for the user 1, feature extraction may be performed on the historical driving behavior data of the user 1 based on the preset feature processing model to obtain the second historical feature vector. The second historical feature vector may include the environment response feature and the fuel consumption feature. The environment response feature may be that the user 1 reduces the speed by an average of 20% on the rainy day, while the fuel consumption feature may be that the average fuel consumption of the user 1 on an urban road is 7 liters per 100 kilometers. The preset feature processing model is a pre-set mathematical model that may output required feature vectors. Each feature may be output through a single model, or all models may be output through a single model.

Optionally, when performing the concatenation processing on the first historical feature vector and the second historical feature vector, the second historical feature vector may be concatenated based on the first historical feature vector; or the first historical feature vector may be concatenated based on the second historical feature vector.

S302, acquire driving feature vectors respectively corresponding to multiple driving styles, where the multiple driving styles are obtained based on a cluster analysis of driving behavior data of the multiple users.

In this step, on the basis of the multiple driving styles obtained by performing the cluster analysis on the driving behavior data of the multiple users, the driving feature vector corresponding to each driving style may be further acquired.

For example, on the basis of three driving styles obtained based on the cluster analysis of the driving behavior data of the multiple users, the driving feature vectors corresponding to the three driving styles may be acquired, namely a driving feature vector 1 corresponding to a driving style 1, a driving feature vector 2 corresponding to a driving style 2, and a driving feature vector 3 corresponding to a driving style 3.

In an optional embodiment, each cluster obtained by clustering may represent one driving style, where the driving style may be a high-dimensional vector. For example, the driving style 1 may be represented by a 64-dimensional high-dimensional vector. The 64-dimensional high-dimensional vector may be a center of a cluster 1, representing an average value or a geometric center of all data points in the cluster.

S303, perform, according to the historical feature vector, a matching processing among the driving feature vectors respectively corresponding to the multiple driving styles to determine a target driving style.

In this step, matching processing of the historical feature vector and the driving feature vectors respectively corresponding to the multiple driving styles may be performed to determine the target driving style.

In a specific implementation, among the driving feature vectors respectively corresponding to the multiple driving styles, the driving style corresponding to a driving feature vector that is consistent with the historical feature vector may be determined as the target driving style; or, if there is no driving feature vector that is consistent with the historical feature vector among the driving feature vectors respectively corresponding to the multiple driving styles, then, the driving style corresponding to the target feature vector that has a highest similarity with the historical feature vector among the driving feature vectors respectively corresponding to the multiple driving styles may be determined as the target driving style.

Optionally, the target feature vector having the highest similarity with the historical feature vector may be selected from the driving feature vectors respectively corresponding to the multiple driving styles using any of similarity measurement methods including cosine similarity, Euclidean distance, and Manhattan distance.

For example, among the three driving feature vectors respectively corresponding to the three driving styles, the driving style 1 corresponding to the driving feature vector 1 that is consistent with the historical feature vector may be determined as the target driving style.

For another example, the target feature vector with the highest similarity with the historical feature vector may be selected from the three driving feature vectors respectively corresponding to the three driving styles using a Euclidean distance measurement method. Then, the driving style corresponding to the target feature vector may be determined as the target driving style. The target feature vector may be the driving feature vector 1, and the target driving style may be the driving style 1 corresponding to the driving feature vector 1.

It should be noted that if the target feature vector selected, by using the similarity measurement method, from the driving feature vectors respectively corresponding to the multiple driving styles includes at least two different driving feature vectors, then the driving styles corresponding to the at least two different driving feature vectors may be recommended to the current user through an interactive interface, and the target driving style may be determined based on a selection of the user.

In addition, if the target feature vector selected from the multiple driving styles using the similarity measurement method includes at least two different driving feature vectors, the driving styles respectively corresponding to the at least two different driving feature vectors may be fused to obtain a new driving style. In a specific implementation, a weighted average may be calculated for the driving feature vectors corresponding to different driving styles, where weights may be set according to a using frequency of the driving style or user preference. The new driving style may also be uploaded to a server or stored in the autonomous mobile device as an alternative driving style.

S304, configure the target driving style in an intelligent driving model of the autonomous mobile device.

In this step, the electronic device may configure the target driving style in the intelligent driving model of the autonomous mobile device in response to a selection operation by the user in a visual interface of the autonomous mobile device.

In an optional implementation, a corresponding relationship with an adjustable parameter in the intelligent driving model may be identified according to the driving feature vector of the target driving style. The adjustable parameter may include speed control, acceleration and deceleration response, turning sensitivity, braking force, and distance maintenance. These parameters may be adjusted through the driving feature vector to ensure that a behavior of the model is consistent with the target driving style.

In another optional implementation, the intelligent driving model may be designed as a modular structure, enabling different driving styles to be loaded and switched as independent modules. Through an open application programming interface (Application Programming Interface, API), the target driving style module may be integrated into the model, allowing for flexible style switching under different driving conditions.

S305, process the driving environment information and the navigation information through the intelligent driving model to obtain a driving decision solution.

In this step, the intelligent driving model configured with the target driving style may process the driving environment information and the navigation information during a driving process of the autonomous mobile device to obtain the driving decision solution. The driving decision solution includes, but is not limited to, at least one of: driving route planning, cutting in processing, lane change timing selection, a following distance, a turning speed, or a start-up time interval with a preceding autonomous mobile device.

The driving route planning refers to select an optimal driving route according to factors such as a current geographic location, a destination, a real-time traffic condition, and a road restriction.

For example, the driving style 1 is a sporty style, the driving style 2 is a comfortable style, and the driving style 3 is an aggressive style; for a scenario where the intelligent driving vehicle is driving from a city center to an airport, the intelligent driving model processes the driving environment information and the navigation information for different driving styles, and the driving route planning may be obtained as follows:
The driving route planning corresponding to the sporty style may include: selecting a route that can provide a smooth driving experience, primarily via a highway and an expressway to maintain a higher speed and stability. Exemplarily, the intelligent driving vehicle may select immediately enter a ring highway after departing from the city center, bypass low-speed zones and traffic lights in a downtown area to ensure a higher average speed throughout an entire trip.

The driving route planning corresponding to the comfortable style may include: prioritizing passenger stability and comfort, avoiding bumpy roads and busy traffic areas. Exemplarily, the intelligent driving vehicle may select a well-landscaped street to avoid noise and congestion of the highway, while also selecting to pass through quiet residential areas to provide a more comfortable driving experience.

The driving route planning corresponding to the aggressive style may include: selecting a route with a shortest time, even if the vehicle needs to pass through heavy traffic. Exemplarily, the intelligent driving vehicle may select a straight path that passes through the city center directly, utilize real-time traffic information to quickly change lanes and overtake, select to utilize side roads or shortcuts to quickly pass through dense traffic areas, thus reducing drive time.

Cutting in processing refers to deciding whether to yield or maintain lane position according to a real-time traffic environment and vehicle dynamic when other vehicles attempt to cut into a current lane, to ensure safe and smooth driving.

For example, the driving style 1 is the sporty style, the driving style 2 is the comfortable style, and the driving style 3 is the aggressive style; the intelligent driving model processes the driving environment information and the navigation information for different driving styles, and the cutting in processing may be obtained as follows:
The cutting in processing corresponding to the sporty style may include: when other vehicles attempt to cut into the current lane, selectively yielding to other vehicles according to the real-time traffic environment to avoid unnecessary deceleration and acceleration. Exemplarily, when detecting a vehicle attempting to cut in, the intelligent driving vehicle may slightly slow down to increase a distance from the preceding vehicle and give enough space for the vehicle to smoothly cut in, thereby maintaining smoothness of overall traffic flow.

The cutting in processing corresponding to the comfortable style may include: when meeting a cutting in situation, preferring to yield proactively to avoid the discomfort of sudden braking or acceleration. Exemplarily, when a vehicle in the adjacent lane attempts to cut in, the intelligent driving vehicle may decelerate in advance to maintain a safe distance and give enough space for the vehicle to safely cut in, thereby ensuring a comfortable experience for passengers.

The cutting in processing corresponding to the aggressive style may include: when meeting a cutting in situation, a choice may be made to maintain lane position and not yield unless a potential collision risk is detected. Exemplarily, when a vehicle attempts to cut in, the intelligent driving vehicle may maintain its current speed or slightly accelerate to prevent the other vehicle from cutting in, thereby maintaining driving speed and rhythm.

The lane change timing selection is to decide, according to the speed and position of surrounding vehicles and navigation requirements of the destination, when to change lanes on a multi-lane road to optimize driving efficiency or avoid obstacles.

For example, the driving style 1 is the sporty style, the driving style 2 is the comfortable style, and the driving style 3 is the aggressive style; the intelligent driving model processes the driving environment information and the navigation information for different driving styles, and the lane change timing selection may be obtained as follows:
The lane change timing selection corresponding to the sporty style may include: on multi-lane roads, selecting to change lanes when traffic flow is relatively stable and there is enough space, according to the speed and position of surrounding vehicles, to optimize driving efficiency. Exemplarily, when the intelligent driving vehicle detects a slow-moving vehicle in the lane ahead, the intelligent driving vehicle may smoothly change lanes while ensuring there is enough space in adjacent lanes to maintain a higher driving speed and smoothness.

The lane change timing selection corresponding to the comfortable style may include: when changing lanes, preferring to change lanes when there is less traffic and a lane change process is the smoothest. Exemplarily, when the intelligent driving vehicle needs to change lanes to follow a navigation instruction, the intelligent driving vehicle may change lanes slowly and smoothly when there is a larger gap between adjacent lanes and fewer vehicles.

The lane change timing selection corresponding to the aggressive style may include: when changing lanes, a choice may be made to change lanes quickly using a smaller gap to reach the destination more quickly. Exemplarily, when the intelligent driving vehicle detects an obstacle or a slow-moving vehicle in the lane ahead, the intelligent driving vehicle may quickly analyze the speed and spacing of traffic in adjacent lanes and select to change lanes as quickly as possible to avoid deceleration and maintain the driving speed.

The following distance refers to dynamically adjusting a safe distance from the preceding vehicle according to a current driving speed, a road condition, and traffic density, so as to ensure sufficient reaction time and driving safety.

For example, the driving style 1 is the sporty style, the driving style 2 is the comfortable style, and the driving style 3 is the aggressive style; the intelligent driving model processes the driving environment information and the navigation information for different driving styles, and the following distance may be obtained as follows:
The following distance corresponding to the sporty style may include: selecting, according to the current driving speed and the road condition, an appropriate following distance while maintaining a smooth driving experience. Exemplarily, when the intelligent driving vehicle is driving at a speed of 100 km/h on the highway, the intelligent driving vehicle may select to maintain the following distance of 50 meters to ensure sufficient reaction time while maintaining a high speed.

The following distance corresponding to the comfortable style may include: considering driving smoothness, selecting a larger following distance. Exemplarily, when the intelligent driving vehicle is driving at the speed of 100 km/h on the highway, the intelligent driving vehicle may select to maintain the following distance of 70 meters to smoothly adjust the speed when traffic changes, thereby ensuring a comfortable experience for passengers.

The following distance corresponding to the aggressive style may include: selecting a smaller following distance in a case of emphasizing fast driving and efficiency. Exemplarily, when the intelligent driving vehicle is driving at the speed of 100 km/h on the highway, the intelligent driving vehicle may select to maintain the following distance of 30 meters to change lanes quickly and overtake in dense traffic, thereby maintaining the driving speed and rhythm.

The turning speed refers to select an appropriate speed according to a road curvature and a vehicle dynamic when turning to ensure vehicle stability and passenger comfort.

For example, the driving style 1 is the sporty style, the driving style 2 is the comfortable style, and the driving style 3 is the aggressive style; the intelligent driving model processes the driving environment information and the navigation information for different driving styles, and the turning speed may be obtained as follows:
The turning speed corresponding to the sporty style may include: while maintaining the smooth driving experience, selecting a higher turning speed according to the road curvature and the vehicle dynamic to ensure the driving stability. Exemplarily, when the intelligent driving vehicle turns on a highway ramp with a small curvature, the vehicle can select to pass at the speed of 40 km/h.

The turning speed corresponding to the comfortable style may include: considering the passenger comfort and the driving stability, selecting a lower turning speed. Exemplarily, when the intelligent driving vehicle turns on the same highway ramp, the vehicle may select to pass at the speed of 30 km/h to reduce lateral acceleration and ensure a comfortable passenger experience.

The turning speed corresponding to the aggressive style may include: selecting an even higher turning speed in a case of emphasizing fast driving and efficiency. Exemplarily, when the intelligent driving vehicle turns on the same ramp, the vehicle may select to pass through at the speed of 50 km/h to complete the turning faster and maintain the driving speed and rhythm.

The start-up time interval with the preceding autonomous mobile device refers to deciding the time interval with the restart of the preceding vehicle at traffic lights or in a stopping state to optimize traffic flow efficiency and driving safety.

For example, the driving style 1 is the sporty style, the driving style 2 is the comfortable style, and the driving style 3 is the aggressive style; the intelligent driving model processes the driving environment information and the navigation information for different driving styles, and the start-up time interval with the preceding autonomous mobile device may be obtained as follows:
A start-up time interval corresponding to the sporty style may include: selecting a shorter start-up time interval to quickly respond to traffic signal changes. Exemplarily, when the traffic light turns green, the intelligent driving vehicle may start to move within 1 second after the preceding vehicle starts to ensure to follow the preceding vehicle quickly, and optimize the traffic flow efficiency.

The start-up time interval corresponding to the comfortable style may include: considering the passenger comfort and the driving stability, selecting an appropriate start-up time interval. Exemplarily, when the traffic light turns green, the intelligent driving vehicle may start to move within 2 second after the preceding vehicle starts to ensure a smooth starting and avoid passengers feeling sudden acceleration.

The start-up time interval corresponding to the aggressive driving style may include: selecting a shorter start-up time interval to quickly respond and enter normal driving speed. Exemplarily, when the traffic light turns green, the intelligent driving vehicle may start to move within 0.5 second after the preceding vehicle starts to quickly return to a normal driving speed and maintain the driving speed and rhythm.

Optionally, the driving environment information may include but is not limited to motion state information of the autonomous mobile device, motion states of surrounding traffic participants, and road traffic information; and/or, the navigation information may include but is not limited to map information, location information of the autonomous mobile device, and path trajectory information.

For example, the intelligent driving model configured with the driving style 1 may process the driving environment information and the navigation information during the driving process of the intelligent driving vehicle to obtain the driving decision solution. The driving decision solution includes the cutting in processing and the start-up time interval with the preceding vehicle.

S306, control, according to the driving decision solution, the autonomous mobile device to drive.

For example, during the driving process of the intelligent driving vehicle, a precise control of the intelligent driving vehicle may be achieved according to the cutting in processing and the start-up time interval with the preceding vehicle in the driving decision solution.

Exemplarily, when the intelligent driving vehicle drives on the highway, the vehicle detects that a vehicle in the adjacent lane attempts to cut in. According to a decision of the cutting in processing, the vehicle slightly decelerates and adjusts the distance to the preceding vehicle, safely creating space and ensuring smooth and safe driving. Meanwhile, when encountering the traffic light, the intelligent driving vehicle may perform an optimization according to the start-up time interval with the preceding vehicle. After the light turns from red to green, the vehicle detects that the preceding vehicle has begun to move, and starts quickly and smoothly within 1 second.

In an embodiment of the present application, an electronic device may analyze historical driving behavior data of a current user to determine a historical feature vector. Then, driving feature vectors corresponding to multiple driving styles are acquired, and these driving styles are obtained through a clustering analysis of the driving behavior data of the multiple users. According to the historical feature vector, a matching processing is performed among the driving feature vectors corresponding to these driving styles to determine a target driving style. The target driving style may be configured into the intelligent driving model of an autonomous mobile device. Further, the intelligent driving model may process driving environment information and navigation information to generate a driving decision solution and control the autonomous mobile device to drive. In the above process, by analyzing the historical driving behavior data of the current user and determining the target driving style, a personalized driving experience can be provided to the user, so that the response and behavior of the autonomous mobile device more conforms to a user's driving habit and preference, thereby improving a user experience.

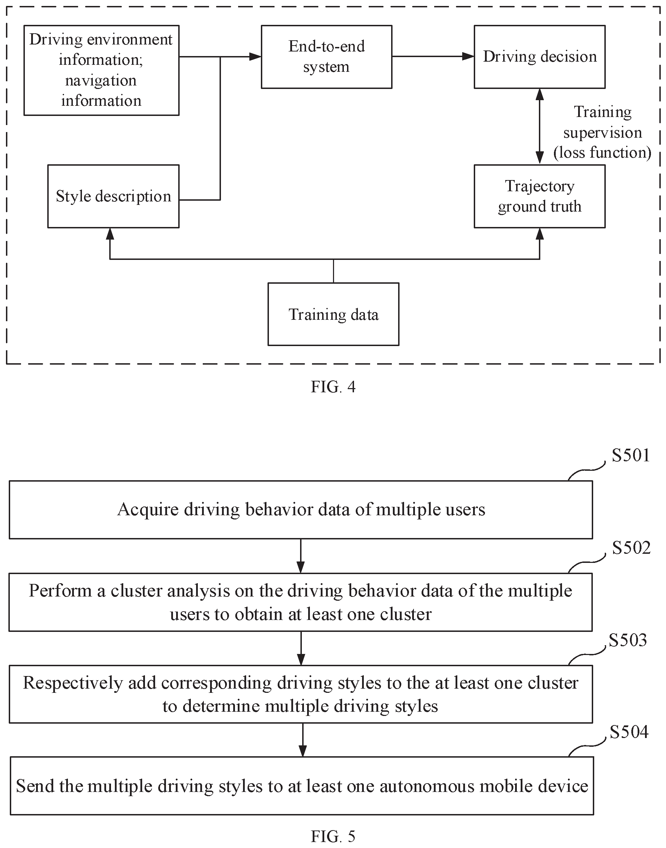

FIG. 4 is a block diagram of a logic for determining a driving decision provided by an embodiment of the present application. Referring to FIG. 4, a target driving style may be configured in an end-to-end system. The end-to-end system may perform comprehensive processing based on driving environment information, navigation information, and the target driving style to generate a driving decision solution. The target driving style is obtained through a cluster analysis of driving behavior data of multiple users, and an appropriate driving style category is selected from a clustering result.

During a training phase of the end-to-end system, each piece of input data not only contains the driving environment information and the navigation information, but also needs to be associated with a corresponding driving style. Meanwhile, the end-to-end system also needs to incorporate a trajectory ground truth as a supervisory signal. By comparing a predicted behavior trajectory output by a model with the trajectory ground truth, a loss function (LOSS) (such as mean squared error or trajectory similarity loss) is calculated to optimize model parameters.

In an embodiment of the present application, through the cluster analysis of the driving behavior data of the multiple users, diverse driving styles may be determined, so that the end-to-end system can flexibly configure the target driving style to meet personalized needs of different users and significantly improve an adaptability of a driving decision and a user experience.

Furthermore, the driving environment information, the navigation information, and the target driving style are integrated and processed in a coordinated manner, which enhances perception and decision-making capabilities of the end-to-end system in complex scenarios, so that the generated driving decision is both safe and scenario adaptive. In addition, introducing the trajectory ground truth as the supervisory signal in the training of the end-to-end system, and combining the loss function to dynamically optimize model parameters, can ensure that a behavioral trajectory output by the system conforms to real driving data, effectively improving accuracy and reliability of the driving decision and matching with the configured driving style, thereby improving a user's driving experience.

FIG. 5 is a schematic flow diagram of a first embodiment of a data processing method for a driving style provided by the present application. Referring to FIG. 5, the method is applied to a server and may include:
S501, acquire driving behavior data of multiple users.

In this step, the server may acquire the driving behavior data of the multiple users in at least one of the following manners.

Manner 1: sensing devices (such as a camera, lidar, millimeter-wave radar, and an accelerometer) equipped on autonomous mobile devices may record the driving behavior data of the multiple users in real time. These driving behavior data may be uploaded to the server through an Internet of Vehicles system, or transferred to a removable storage medium and then uploaded to the server.

Manner 2, acquiring the driving behavior data of the multiple users from open, shared data platforms. These data platforms usually provide datasets from multiple sources for technical personnel to research and use. Through an API or a data download service, the server may access data on these platforms and then acquire the driving behavior data of the multiple users.

S502, perform a cluster analysis on the driving behavior data of the multiple users to obtain at least one cluster.

In this step, the server performs the cluster analysis on the driving behavior data of the multiple users to obtain the at least one cluster. In a specific implementation, for each user, the server may acquire a feature vector corresponding to the user according to the driving behavior data of the user, the feature vector may include at least one piece of data related to the driving style. Further, the cluster analysis may be performed on feature vectors of the multiple users to obtain the at least one cluster.

Optionally, for each user, feature extraction may be performed on the driving behavior data based on a preset quantitative indicator and/or a preset feature processing model to obtain the feature vector;
the preset quantitative indicator is determined based on driving behaviors of the multiple users in at least one driving scenario including but not limited to cutting in, starting and stopping, congestion, vehicle following, and turning; the preset feature processing model is used to perform feature extraction on the driving behavior data of the user to obtain the feature vector.

Similarly, based on the preset quantitative indicator, feature extraction may be performed on historical driving behavior data to obtain a first historical feature vector, and the first historical feature vector may be determined as a historical feature vector; or,
based on the preset feature processing model, feature extraction may be performed on historical driving behavior data to obtain a second historical feature vector, and the second historical feature vector may be determined as a historical feature vector; or,
based on the preset quantitative indicator, feature extraction may be performed on historical driving behavior data to obtain a first historical feature vector, based on the preset feature processing model, feature extraction may be performed on the historical driving behavior data to obtain a second historical feature vector, and concatenation processing may be performed on the first historical feature vector and the second historical feature vector to obtain a historical feature vector.

It should be understood that for each user, the above historical driving behavior data is essentially also the driving behavior data of the user; the feature vector of the user may be the first historical feature vector, the second historical feature vector, or a combined vector obtained by concatenating the first historical feature vector and the second historical feature vector.

Optionally, a clustering algorithm used in the cluster analysis of the driving behavior data of the multiple users may include any one of a K-means clustering algorithm, a hierarchical clustering algorithm, and a DBSCAN clustering algorithm. After the cluster analysis is completed, each cluster may represent a typical driving style.

For example, the K-means clustering algorithm may be used to perform the cluster analysis on the feature vectors respectively corresponding to the driving behavior data of 100 users to obtain three clusters, these three clusters represent three driving styles respectively.

S503, respectively add corresponding driving styles to the at least one cluster to determine multiple driving styles.

In this step, a driving style may be added to each cluster in the clustering result to obtain the multiple driving styles.

Driving behavior data belonging to a same category usually has a similar behavioral style. Therefore, by using the clustering result, algorithm experts may add, for each cluster, a driving style that conforms to its behavioral style.

For example, corresponding driving style names and other information may be added to the three clusters obtained by the K-means clustering algorithm to obtain three driving styles. A cluster 1 may correspond to a driving style 1, a cluster 2 may correspond to a driving style 2, and a cluster 3 may correspond to a driving style 3. The driving style 1 may be a sporty style, the driving style 2 may be a comfortable style, and the driving style 3 may be an aggressive style.

S504, send the multiple driving styles to at least one autonomous mobile device.

In a specific implementation, each driving style sent by the server to the at least one autonomous mobile device may also include a configuration parameter or a configuration file of the driving style. The configuration parameter or the configuration file may include, but are not limited to, speed control parameters, turning sensitivity, following distance and distance maintenance, response time to obstacles, and response to traffic signals.

For example, the server may send the driving style 1, the driving style 2, and the driving style 3 to the at least one intelligent driving vehicle. The driving style 1 may further include configuration parameters of the driving style 1, and the configuration parameters may include a maximum speed of 120 km/h, a 0-100 km/h acceleration time of 7 seconds, and a minimum safe distance of 50 meters from the preceding vehicle during high-speed driving; the driving style 2 may further include configuration parameters of the driving style 2, and the configuration parameters may include a maximum speed of 100 km/h, a 0-100 km/h acceleration time of 10 seconds, and a minimum safe distance of 70 meters from the preceding vehicle during high-speed driving; the driving style 2 may further include the configuration parameters of the driving style 2, and the configuration parameters may include a maximum speed of 140 km/h, a 0-100 km/h acceleration time of 3 seconds, and a minimum safe distance of 30 meters from the preceding vehicle during high-speed driving.

In an embodiment of the present application, a server may acquire driving behavior data of multiple users and perform a cluster analysis on the data to identify at least one cluster. Then, each cluster may be assigned a corresponding driving style, thereby determining multiple driving styles. Finally, the server may send the multiple driving styles to at least one autonomous mobile device. In the above process, a personalized driving experience may be achieved through acquiring and analyzing the driving behavior data of the multiple users by the server, and sending results to the autonomous mobile device. This enables the autonomous mobile device to determine a target driving style that conforms to a driving preference and habit of a current user according to historical driving behavior data of the current user, thereby improving user satisfaction.

In a possible design, a driving style identification method may further include: the autonomous mobile device may receive the multiple driving styles sent by the server, and display the multiple driving styles in a visual interface of the autonomous mobile device.

Optionally, the user may select a target driving style from the multiple driving styles in the visual interface, fine-tune the target driving style through the visual interface, and set personalized parameters such as acceleration, turning sensitivity, and braking intensity, so as to create and experience a unique driving style.

Further, after selecting the target driving style on the visual interface, the user may perform fine-tuning according to an actual driving experience, the visual interface may provide real-time data feedback, such as speed, acceleration, and energy consumption, to help the user make further turning. In addition, the system may intelligently recommend the most suitable driving style on the visual interface according to a current driving environment and a current road condition.

In an embodiment of the present application, the autonomous mobile device may receive the multiple driving styles sent by the server and display the multiple driving styles on the visual interface of the autonomous mobile device for the user to select. The user may freely select and tune the driving style according to personal preferences, thereby obtaining a more personalized driving experience.

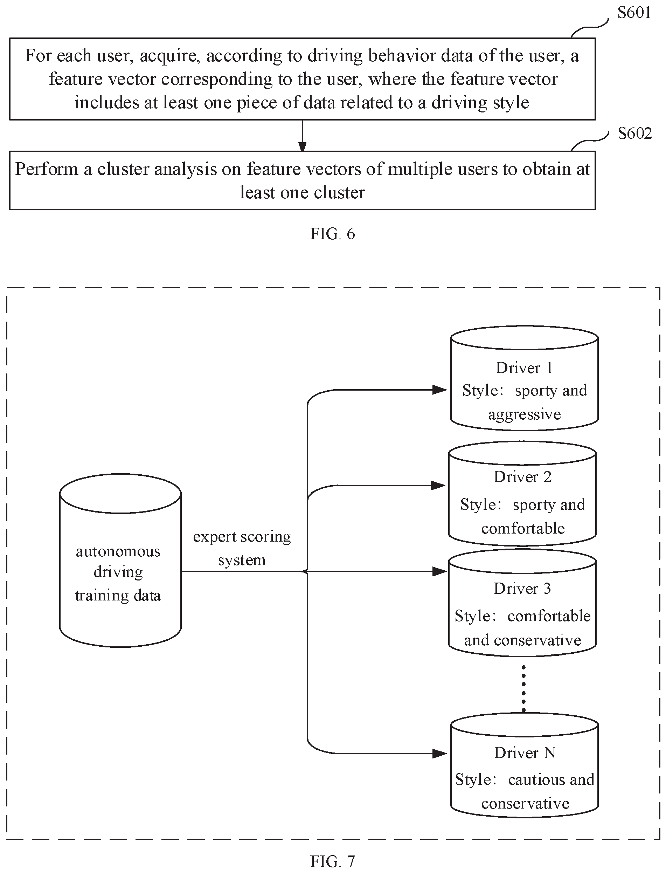

FIG. 6 is a schematic flow diagram of a second embodiment of a data processing method for a driving style provided by the present application. Referring to FIG. 6, on the basis of the embodiment shown in FIG. 5, step S502 may include:
S601, for each user, acquire, according to driving behavior data of a user, a feature vector corresponding to the user, where the feature vector includes at least one piece of data related to a driving style.

In this step, for each user, feature extraction may be performed on the driving behavior data of the user based on a preset quantitative indicator and/or a preset feature processing model to obtain the feature vector.

Specifically, the preset quantitative indicator is determined based on the driving behaviors of multiple users in at least one driving scenario including but not limited to cutting in, starting and stopping, congestion, vehicle following, and turning.

For example, for a user 1, based on the preset quantitative indicator, feature extraction may be performed on historical driving behavior data of the user 1 to obtain a first historical feature vector. The first historical feature vector may include multiple numerical indicators determined based on preset quantitative indicators. Exemplarily, the first historical feature vector may include numerical indicators determined based on a preset quantitative indicator 1 and a preset quantitative indicator 2. The preset quantitative indicator 1 may be based on a closest distance between the intelligent driving vehicle and other vehicles in a game based on a cutting in scenario, so that a numerical indicator 1 may be extracted from the historical driving behavior data of the user 1, and the numerical indicator 1 may be that the closest distance between the intelligent driving vehicle and other vehicles is 0.3m. The preset quantitative indicator 2 may be based on how soon an ego vehicle begins to move after a preceding vehicle starts in a starting and stopping scenario, so that a numerical indicator 2 may be extracted from the historical driving behavior data of the user 1, and the numerical indicator 2 may be that the vehicle starts moving 2s after the preceding vehicle starts.

Specifically, the preset feature processing model is used to perform feature extraction on the driving behavior data of the user to obtain the feature vector.

For example, for the driving behavior data of a user A, the first historical feature vector may be obtained through extraction based on the preset quantitative indicator, and the second historical feature vector may be obtained through extraction based on the preset feature processing model. The first historical feature vector and the second historical feature vector are concatenated to obtain a combined vector as a final feature vector of the user A.

In addition, if only the preset quantitative indicator or the preset feature processing model is adopted to perform feature extraction on the driving behavior data of the user A to obtain the feature vector, the feature vector may be the first historical feature vector or the second historical feature vector.

S602, perform a cluster analysis on feature vectors of the multiple users to obtain at least one cluster.

In this step, the cluster analysis may be performed on the feature vectors respectively corresponding to the driving behavior data of the multiple users to obtain at least one cluster.

In a specific embodiment, each cluster may correspond to one driving style, and the driving style may be represented by a center of the cluster. The vector representing the center of the cluster may be used as the driving feature vector of the driving style.

In an embodiment of the present application, through obtaining driving behavior data of multiple users, a server generates a feature vector for each user. After a cluster analysis, these feature vectors may be used to identify at least one cluster. Each cluster is assigned a specific driving style, thereby determining multiple driving styles. Finally, the server may send the multiple driving styles to at least one autonomous mobile device. Through this process, the autonomous mobile device can determine a target driving style that best conforms a driving preference and habit of a current user according to historical driving behavior data of the current user, and provide the user with a personalized driving experience.

FIG. 7 is a schematic diagram of a clustering result provided by an embodiment of the present application. Referring to FIG. 7, autonomous driving training data may include driving behavior data of multiple users. Through a preset quantitative indicator in an expert scoring system, feature extraction may be performed on the driving behavior data of the multiple users to obtain feature vectors, and then a cluster analysis is performed on the feature vectors to obtain at least one cluster, corresponding driving styles are respectively added to the at least one cluster to determine multiple driving styles.

For example, the determined multiple driving styles may include a sporty and aggressive driving style, a sporty and comfortable driving style, a comfortable and conservative driving style, ..., and a cautious and conservative driving style. A user 1 (driver 1) may have the sporty and aggressive driving style, a user 2 (driver 2) may have the sporty and comfortable driving style, a user 3 (driver 3) may have the comfortable and conservative driving style, and a user N (driver N) may have the cautious and conservative driving style.

In a possible design, the driving style corresponding to any cluster has a corresponding style description, and the style description is used to interpret the driving style, and then, sending multiple driving styles to at least one autonomous mobile device in step S504 may include: sending the multiple driving styles and the style description corresponding to each driving style to the at least one autonomous mobile device.

In an optional implementation, an algorithm expert may add a qualitative style description to the driving style corresponding to each cluster according to a clustering result, thereby achieving an interpretation of the driving style.

For example, a driving style 1 is a sporty style, and its corresponding style description is: the sporty style provides a quick acceleration response and a sensitive turning operation, and tends to maintain a medium-high driving speed. When cornering or changing lanes, a balance between maneuverability and efficiency is prioritized, which is very suitable for a user who pursues driving pleasure. A driving style 2 is a comfortable style, and its corresponding style description is: the comfortable style focuses on driving smoothness, with linear and soft acceleration and braking processes, actively maintaining a safe distance from a preceding vehicle, and reducing sharp turns or frequent lane changes, which is suitable for scenarios requiring high comfort, such as family driving or long-distance driving. A driving style 3 is an aggressive style, and its corresponding style description is: the aggressive style frequently performs overtaking and lane-changing operations, with large variations in acceleration and braking, tends to drive at speeds close to an upper limit of a road speed limit, responds quickly to dynamic changes in a traffic flow, and is suitable for a time-sensitive task or a scenario requiring high traffic efficiency.

In another optional embodiment, the style description corresponding to the driving style may further include at least one of: an overtaking probability, traffic efficiency, an acceleration frequency, a lane change frequency, driving smoothness, or an average speed.

The overtaking probability may refer to a frequency of performing an overtaking operation by the user during driving. For example, a user with the aggressive style may overtake every 10 minutes on a highway in order to overtake slower vehicles quickly, while a user with a comfortable style may overtake only when it is safe and necessary in an entire trip to ensure driving safety.

The drive efficiency may refer to efficiency of a vehicle passing through a certain distance per unit time. For example, a user with the aggressive style may maintain high drive efficiency on an urban road with a heavy traffic flow, so that the user can arrive at a destination 10 minutes faster than average time during rush hour, while the user with the comfortable style may prioritize driving smoothness, even if driving time is a little longer.

The driving smoothness may refer to an ability of the autonomous mobile device to maintain a stable state during driving, including the smoothness of acceleration, braking, and turning. For example, the user with the aggressive style may accelerate and turn sharply more frequently, resulting in lower driving smoothness. The user with the comfortable style may maintain a steady speed and gentle turns during long journeys to ensure the comfort of passengers.

The average speed may refer to an average driving speed of the autonomous mobile device over a period of time. For example, the user with the aggressive style may maintain the average speed of 60 km/h on a road with a 60 km/h speed limit to enjoy driving while following traffic rules, while the user with the comfortable style may maintain the average speed of 40 km/h to ensure comfort and safety.

The acceleration frequency may refer to a frequency of performing an acceleration operation by the user during driving. For example, the user with the aggressive style may accelerate once every 5 minutes on a city road to quickly speed up between traffic lights, while the user with the comfortable style may accelerate only once every 15 minutes to maintain a smooth driving experience.

The lane change frequency may refer to a frequency of changing lanes by the user during driving. For example, the user with the aggressive style may change lanes every two minutes on a congested city road to find a fastest route, while the user with the comfortable style may only change lanes when necessary throughout the entire trip.

It should be noted that the indicator included in the style description corresponding to the driving style, such as at least one of the overtaking probability, the traffic efficiency, the acceleration frequency, the lane change frequency, the driving smoothness, and the average speed, may be calculated based on average values of the clustering result. These average values provide a representative perspective for the description of driving style, so that each style can reflect a typical feature of each cluster in the cluster analysis result, thereby providing more accurate and comprehensive interpretation of the driving style.

In an embodiment of the present application, the server may generate a style description including a qualitative and/or quantitative indicator for the driving style corresponding to each cluster, and send the style description to the autonomous mobile device, so that the autonomous mobile device can select and adapt to a driving style that suits a preference and habit of the user according to the historical behavior of the user, thereby providing a personalized driving experience.

Similarly, in a possible design, the driving style identification method may further include: the autonomous mobile device may receive the sent style description of each driving style, and display multiple driving styles and the style description corresponding to each driving style in a visual interface of the autonomous mobile device.

Optionally, a detailed description of each driving style is displayed through the visual interface, so that the user can understand the features and applicable scenarios of each driving style better. In addition, the user may select the target driving style according to the qualitative and/or quantitative indicator (such as the acceleration frequency and the average speed) in the style description, combined with the driving preference and need of the user.

In an embodiment of the present application, an autonomous mobile device can receive and display multiple driving styles and corresponding detailed style descriptions, providing a user with an intuitive selection experience through a visual interface. In the above process, not only can the user easily understand and compare features of different driving styles, but also the user can select a target driving style according to a personal preference, thereby achieving a personalized driving experience.

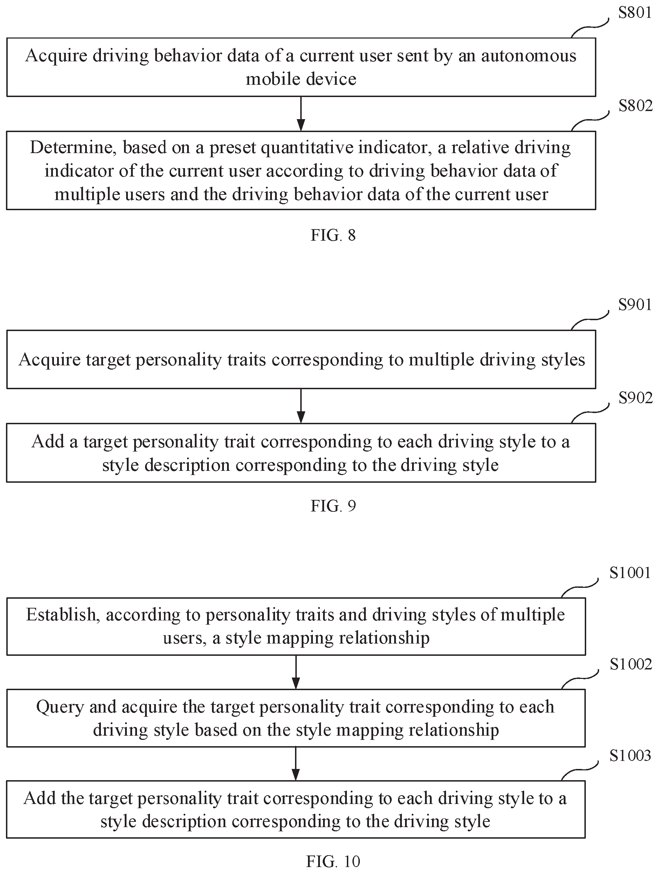

FIG. 8 is a schematic flow diagram of a third embodiment of a data processing method for a driving style provided by the present application. Referring to FIG. 8, on the basis of the above embodiment, the data processing method for the driving style may further include:
S801, acquire driving behavior data of a current user sent by an autonomous mobile device.

For example, a server may receive the driving behavior data of a current user A sent by the autonomous mobile device.

S802, determine, based on a preset quantitative indicator, a relative driving indicator of the current user according to driving behavior data of multiple users and the driving behavior data of the current user.

In this step, the server may analyze the driving behavior data of the multiple users and the driving behavior data of the current user to determine the relative driving indicator for the current user based on the preset quantitative indicator. The relative driving indicator is used to represent a ranking of the current user among the multiple users. The preset quantitative indicator is determined based on a driving behavior of the user in at least one driving scenario, including but not limited to: cutting in, starting and stopping, congestion, vehicle following, and turning.

Optionally, numerical indicator extraction may be performed on the driving behavior data of the current user and the driving behavior data of the multiple users according to the preset quantitative indicator. The ranking of the current user among the multiple users may be determined according to a comprehensive position of the numerical indicator of the current user among numerical indicators of the multiple users.

For example, the ranking of the current user among the multiple users may be acquired through the following steps ①②③.

Step ①, for each driving scenario, the server may extract the numerical indicator based on the preset quantitative indicator. For example, in a cutting in scenario, a cutting in frequency in the driving behavior data of the current user A and the multiple users may be extracted.

Step ②, the server may compare the numerical indicator of the current user A with numerical indicators of multiple other users to generate a relative ranking. For example, in a cutting in scenario, the server may compare a cutting in frequency of the current user A with that of other users. Through a ranking algorithm, the server may determine a position of the current user A within an overall user group. Assume that the cutting in frequency of the current user A ranks in a top 20% of all users, that is, a cutting in behavior of the current user A is more frequently than 80% of users.

Step ③, the server may perform a comprehensive analysis on the relative ranking in various scenarios to generate a relative driving indicator, which may provide an overall driving score for the current user. The overall driving score of the current user A may be calculated through a weighted average or other statistical methods to provide a comprehensive assessment for an overall driving style of the current user A, and determine the relative driving indicator of the current user A among the multiple users, such as an aggressive degree ranks in the top 10%, or a comfortable degree ranks in the top 5%.

Optionally, after determining the relative driving indicator of the current user among the multiple users, the server may select to send the relative driving indicator directly to the autonomous mobile device or a terminal device of the current user. In addition, the server may integrate the relative driving indicator into a driving style description report and send the report to the current user. This allows the current user to clearly understand the overall driving score of the current user, thereby helping the current user understand the current user's own driving style better. The terminal device may be a smartphone, a laptop, a smartwatch, or a notebook computer of the current user.

In an embodiment of the present application, a server may acquire driving behavior data of a current user sent by an autonomous mobile device, based on a preset quantitative indicator, analyze driving behavior data of multiple users and the data of the current user to determine a relative driving indicator of the current user. Through the relative driving indicator, the user can understand the user's ranking within a larger user group, helping the user identify a relative position of the user's driving style and motivating the user to improve the user's driving behavior to achieve a higher ranking or better driving performance.

FIG. 9 is a schematic flow diagram of a fourth embodiment of a data processing method for a driving style provided by the present application. Referring to FIG. 9, on the basis of the above third embodiment, the data processing method for the driving style may further include:
S901, acquire target personality traits corresponding to multiple driving styles.

In this step, a server may acquire a target personality trait of the driving style corresponding to each cluster.

The personality trait may be a personalized trait inferred by the server after analyzing driving behavior data, where the personality trait may include but is not limited to: adventurous, cautious, patient, and confident.

In an optional embodiment, the server may pre-train a personality analysis model dedicated to inferring personality traits. The driving behavior data of each user may be analyzed through the personality analysis model to obtain the personality trait of each user. For the driving style corresponding to any cluster, the personality trait that appears most frequently among the users corresponding to the driving style may be selected from the users included in the driving style as the target personality trait for the driving style. Optionally, the personality analysis model may be combined with a pre-set feature processing model to form a comprehensive model that may output the personality trait of the user and a feature vector according to the driving behavior data of each user at the same time.

Exemplarily, the personality trait may be a personality type formed by selecting one personality description respectively from the following four personality dimensions: a dimension 1 includes introversion and extroversion, a dimension 2 includes sensing and intuition, a dimension 3 includes thinking and feeling, and a dimension 4 includes judgment and perception.

For example, the server may analyze the driving behavior data of the multiple users and infer that the target personality trait of a driving style 1 (cluster 1) is adventurous, the target personality trait of a driving style 2 (cluster 2) is cautious, and the target personality trait of a driving style 3 (cluster 3) is patient.

S902, add the target personality trait corresponding to each driving style to a style description corresponding to the driving style.

For example, the server may add an adventurous personality trait corresponding to the driving style 1 to a style description 1 corresponding to the driving style 1, add a cautious personality trait corresponding to the driving style 2 to a style description 2 corresponding to the driving style 2, and add a patient personality traits corresponding to the driving style 3 to a style description 3 corresponding to the driving style 3.

In an embodiment of the present application, the server may acquire target personality traits corresponding to multiple driving styles and add the target personality trait corresponding to each driving style to a style description corresponding to the driving style. By combining the personality trait with the driving style, a user may understand a relationship between driving behavior and the personality trait better, and provide personalized feedback to the user.

On the basis of the embodiment shown in FIG. 9, the above data processing method for the driving style will be further described in detail below in conjunction with FIG. 10.

FIG. 10 is a schematic flow diagram of a fifth embodiment of the data processing method for the driving style provided by the present application. Referring to FIG. 10, on the basis of the above fourth embodiment, the data processing method for the driving style may include:
S1001, establish, according to personality traits and driving styles of multiple users, a style mapping relationship.

In this step, a server may establish the style mapping relationship according to the personality traits and the driving styles of the multiple users. The style mapping relationship includes a target personality trait corresponding to each driving style, the target personality trait is a personality trait that appears most frequently among the users corresponding to the driving style.

Optionally, the server may acquire the personality trait of each user while acquiring driving behavior data of the multiple users. The personality trait of each user may be selected by the user in a visual interface through an autonomous mobile device.

For example, the visual interface of an intelligent driving vehicle may provide multiple personality trait options for users to select. Each user may select the user's own personality trait to upload to the server together while uploading driving behavior data. Exemplarily, when uploading the driving behavior data, a user 1 may select adventurous personality trait of the user 1 to upload to the server together.

When the server performs a cluster analysis on the driving behavior data of the multiple users to acquire at least one cluster and further obtains the driving style corresponding to each cluster, the personality trait that appears most frequently among users corresponding to the driving style may be selected as the target personality trait corresponding to the driving style, and the style mapping relationship may be established according to each driving style and the target personality trait corresponding to the driving style.

For example, based on the personality traits and the driving styles of the multiple users, the style mapping relationship may be established, where some of the corresponding relationships may be shown in Table 1:

**Table 1**

| Cluster result | Driving style | Target personality trait |
|---|---|---|
| Cluster 1 | Driving style 1 | Adventurous |
| Cluster 2 | Driving style 2 | Cautious |
| Cluster 3 | Driving style 3 | Patient |

S1002, query and acquire the target personality trait corresponding to each driving style based on the style mapping relationship.

For example, based on the style mapping relationship, it may be queried and acquired that the target personality trait corresponding to the driving style 1 is adventurous, the target personality trait corresponding to the driving style 2 is cautious, and the target personality trait corresponding to the driving style 3 is patient.

S1003, add the target personality trait corresponding to each driving style to the style description corresponding to the driving style.

For example, the adventurous personality trait, the cautious personality trait, and the patient personality trait may be added to a style description 1, a style description 2, and a style description 3, respectively.

In an embodiment of the present application, a server may establish a style mapping relationship according to personality traits and driving styles of multiple users. Through the style mapping relationship, the server can query and acquire the target personality trait corresponding to each driving style and integrate these target personality traits into the corresponding driving style descriptions. This can help a user understanding deeply a connection between the user's driving behavior and personality trait, providing a personalized feedback and suggestion to enhance a user experience.

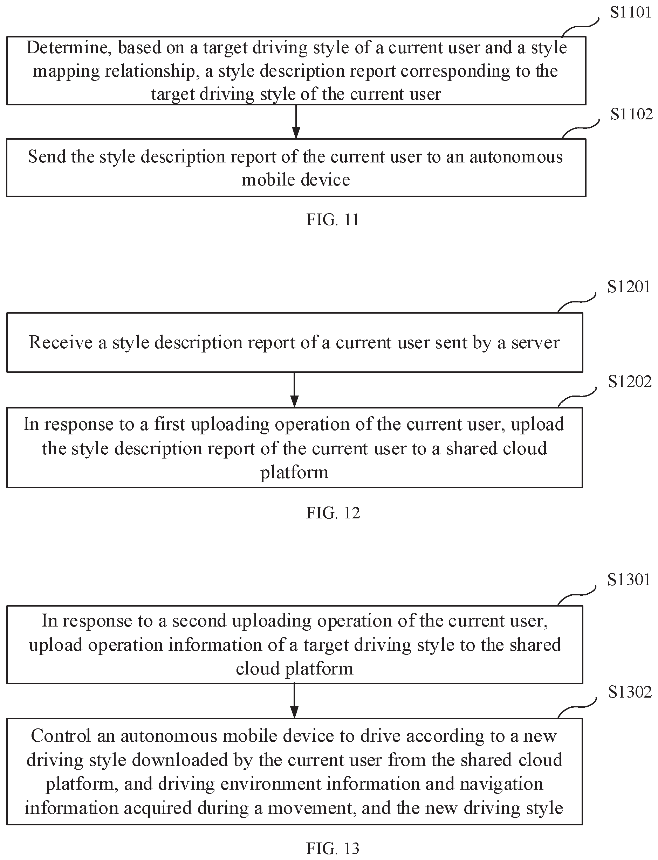

FIG. 11 is a schematic flow diagram of a sixth embodiment of a data processing method for a driving style provided by the present application. Referring to FIG. 11, on the basis of the above fifth embodiment, the data processing method for the driving style may include:
S1101, determine, based on a target driving style of a current user and a style mapping relationship, a style description report corresponding to the target driving style of the current user.

In this step, a server may acquire the target driving style of the current user, determine a target personality trait corresponding to the target driving style based on a pre-established style mapping relationship, and add the target personality trait to the style description corresponding to the target driving style to establish a style description report specifically for the current user. The style description report may include at least one of an overtaking probability, traffic efficiency, an acceleration frequency, a lane change frequency, driving smoothness, an average speed, a relative driving indicator, and a personality trait.

For example, based on historical driving behavior data of a user A, the target driving style of the user A is identified as a driving style 1 from multiple driving styles. Based on the pre-established style mapping relationship, the target personality trait corresponding to the driving style 1may be determined as adventurous. The adventurous personality trait is added to a style description 1 corresponding to the driving style 1 to establish the style description report specifically for the user A. The style description report may include: the driving style of the current user A is an aggressive style, an average speed of 50 km/h may be maintained on a road with a 60 km/h speed limit, acceleration is performed every 4 minutes on an urban road, an aggressive degree of the current user A ranks in the top 10% among the multiple users with the adventurous personality trait, the personality trait is adventurous.

In an optional embodiment, in addition to determining the target personality trait of the current user based on the style mapping relationship, a more detailed personality trait of the current user may be further acquired through a personality trait inference model. The personality trait inference model may accept multiple inputs, such as the driving style, detailed driving data of the user, and an age. Through these inputs, the model can infer and output a more accurate personality trait. The personality trait inference model may be a pre-trained deep learning model or an artificial intelligence model.

For example, the personality trait inference mode is the artificial intelligence model, and the artificial intelligence model may analyze behavior modes of the current user A under different driving conditions, such as acceleration and braking habits, turning speed, and reactions in different weather and traffic conditions. In addition, the artificial intelligence model may further consider an impact of the current user A's age on a driving habit and a risk preference. By integrating these factors, the artificial intelligence model may output a more detailed and personalized personality trait of the current user A. Exemplarily, the personality trait of the current user A output by the artificial intelligence model may be: the current user A tends to drive fast in good weather and lighter traffic, showing a high risk preference; slows down in inclement weather to prioritize safety; and becomes easily impatient in long traffic congestion.

S1102, send the style description report of the current user to the autonomous mobile device.

For example, the server may send the style description report of the current user A to the intelligent driving vehicle of the current user A.

In an embodiment of the present application, a server may determine a corresponding style description report based on a target driving style of a current user and a style mapping relationship, and send the style description report to an autonomous mobile device. In this way, the current user can obtain personalized driving feedback, helping the user understand a connection between the user's own driving behavior and personality trait better. In addition, the style description report may include detailed driving behavior analysis, such as an overtaking probability, traffic efficiency, an acceleration frequency, etc., so as to provide the current user with a specific improvement suggestion, enhance a user experience, and enable the current user to experience a more intelligent and personalized service when using the autonomous mobile device.

FIG. 12 is a schematic flow diagram of a third embodiment of the driving style identification method provided by the present application. Referring to FIG. 12, after a server sends a style description report of a current user to an autonomous mobile device, the driving style identification method may further include:
S1201, receive the style description report of the current user sent by the server.

In this step, an electronic device may receive the style description report of the current user sent by the server, the style description report includes at least one of: an overtaking probability, traffic efficiency, an acceleration frequency, a lane change frequency, driving smoothness, an average speed, a relative driving indicator, and a personality trait.

For example, the electronic device may receive the style description report of the current user A sent by the server, the style description report may include: the driving style of the current user A is an aggressive style, an average speed of 50 km/h may be maintained on a road with a 60 km/h speed limit, acceleration is performed every 4 minutes on an urban road, an aggressive degree of the current user A ranks in the top 10% among the multiple users with adventurous personality traits, and the personality trait is adventurous.

S1202, in response to a first uploading operation of the current user, upload the style description report of the current user to a shared cloud platform.

In this step, the electronic device may upload the style description report of the current user to the shared cloud platform in response to the first uploading operation of the current user. The shared cloud platform is used for interaction among users of multiple autonomous mobile devices.

The shared cloud platform may be a centralized data interaction center, allowing users of the multiple autonomous mobile devices to interact and share data. Specifically, it may include operations such as liking, commenting, communicating, and sharing.

For example, the shared cloud platform may be an Internet community where the user may upload the user's own style description report for users in the Internet community to comment on, like, and so on.

Optionally, the first uploading operation of the current user may be triggered in multiple ways, such as a manual operation by the user on the electronic device, a preset automatic uploading condition (such as regular uploading or uploading after a specific event), etc.

In an embodiment of the present application, after receiving a style description report of a current user sent by a server, an electronic device may upload the style description report of the current user to a shared cloud platform in response to a manual operation of the current user. By uploading the style description report to the shared cloud platform, personalized driving style sharing and interaction can be achieved, thereby improving user participation and an overall experience.

FIG. 13 is a schematic flow diagram of a fourth embodiment of the driving style identification method provided by the present application. Referring to FIG. 13, on the basis of the embodiment shown in FIG. 12, the driving style identification method may further include:
S1301, in response to a second uploading operation of the current user, upload operation information of a target driving style to the shared cloud platform.

In this step, an electronic device may upload the operation information of the target driving style to the shared cloud platform in response to the second uploading operation of the user, the operation information including the target driving style and at least one of the following: kilometers traveled, average energy consumption, and operation time for the target driving style.

Optionally, after controlling an autonomous mobile device to travel for a period of time according to the target driving style, and driving environment information and navigation information acquired during a movement, in response to the second uploading operation, the electronic device may upload the operation information of the target driving style to the shared cloud platform.

Similarly, the second uploading operation may be triggered in the same way as the first uploading operation, such as such as a manual operation by the user on the electronic device, a preset automatic uploading condition (such as regular uploading or uploading after a specific event), etc.

For example, when the target driving style is a driving style 1, after an intelligent driving vehicle deployed with the driving style 1 has been in operation for a week, in response to the manual operation by a current user A, the operation information of the driving style 1 may be uploaded to the shared cloud platform. The operation information includes: the driving style 1, along with 200 kilometers traveled under the driving style 1, an average energy consumption of 7 liters/100 kilometers for the driving style 1, and an operation time of 48 hours for the driving style 1. Optionally, if a power source of the intelligent driving vehicle is electrical energy, the average energy consumption may be expressed in kilowatt-hours/100 kilometers.

In another optional embodiment, the target driving style determined according to historical driving behavior data corresponds to a driving style vector. The electronic device may separately upload the driving style vector to the shared cloud platform in response to a third uploading operation of the current user. In addition, the electronic device may also upload the driving style vector while uploading the operation information of the target driving style to the shared cloud platform in response to the second uploading operation of the current user. The driving style vector may be obtained through a method of consistency matching, similarity matching, or vector fusion.

It should be noted that since style data (such as the driving style and the style description) only includes a style-related feature (such as the driving style vector), and does not include specific driving scenarios and map information, or contain personal privacy data, no other desensitization processing is required before sharing, making it easy to share without exposing personal information.

S1302, control the autonomous mobile device to drive according to a new driving style downloaded by the current user from the shared cloud platform, the driving environment information and the navigation information acquired during the movement, and the new driving style.

In this step, the electronic device may acquire the new driving style downloaded by the current user from the shared cloud platform, and configure the new driving style in the intelligent driving model of the autonomous mobile device, and then control the autonomous mobile device to drive by using the driving environment information and the navigation information acquired during the movement of the autonomous mobile device.

In an optional implementation, after experiencing the new driving style, the current user may provide feedback on the new driving style in the shared cloud platform, including liking, commenting, communication, and sharing.

In the embodiment of the present application, the electronic device may upload the operation information of the target driving style to the shared cloud platform in response to the second uploading operation of the current user. Through uploading the operation information, the current user may share an actual performance of the driving style with other users on the shared cloud platform, enhancing a sense of participation of the current user and interaction with other users.

Furthermore, according to the driving style identification method provided by the embodiment of the present application, the current user may browse driving styles shared by other users on the shared cloud platform, giving the current user more options, and the current user may select a driving style of interest to download. After downloading, the current user may configure and experience the new driving style on the user's own autonomous mobile device, exploring different driving experiences and improving user satisfaction.

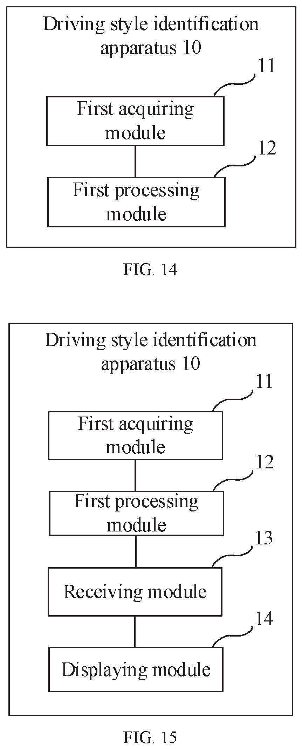

FIG. 14 is a schematic structural diagram of a first embodiment of a driving style identification apparatus provided by the present application. Referring to FIG. 14, the driving style identification apparatus 10 includes:
a first acquiring module 11, configured to identify, based on historical driving behavior data of a current user, a target driving style of the current user from multiple driving styles, where the multiple driving styles are obtained based on a cluster analysis of driving behavior data of multiple users;
a first processing module 12, configured to control, according to the target driving style, and driving environment information and navigation information acquired during a movement, the autonomous mobile device to drive.

The driving style identification apparatus provided in the embodiment of the present application can execute the technical solutions shown in the above method embodiments, and the implementation principles and beneficial effects thereof are similar and will not be repeated here.

In a possible implementation, the first acquiring module 11 is specifically configured to:
determine, according to the historical driving behavior data, a historical feature vector;
acquire driving feature vectors respectively corresponding to the multiple driving styles;
perform, according to the historical feature vector, a matching processing among the driving feature vectors respectively corresponding to the multiple driving styles to determine the target driving style.

In a possible implementation, the first acquiring module 11 is specifically configured to:
perform, based on a preset quantitative indicator and/or a preset feature processing model, feature extraction on the historical driving behavior data to obtain the historical feature vector;
where the preset quantitative indicator is determined based on driving behaviors of the multiple users in at least one driving scenario of cutting in, starting and stopping, congestion, vehicle following, or turning; where the preset feature processing model is used to perform feature extraction on driving behavior data of a user to obtain a feature vector.

In a possible implementation, the first acquiring module 11 is specifically configured to:
perform, based on the preset quantitative indicator, feature extraction on the historical driving behavior data to obtain a first historical feature vector, and determine the first historical feature vector as the historical feature vector; or,
perform, based on the preset feature processing model, feature extraction on the historical driving behavior data to obtain a second historical feature vector, and determine the second historical feature vector as the historical feature vector; or,
perform, based on the preset quantitative indicator, feature extraction on the historical driving behavior data to obtain a first historical feature vector; perform, based on the preset feature processing model, feature extraction on the historical driving behavior data to obtain a second historical feature vector; and perform concatenation processing on the first historical feature vector and the second historical feature vector to obtain the historical feature vector.

In a possible implementation manner, the first processing module 12 is specifically configured to:
configure the target driving style in an intelligent driving model of the autonomous mobile device;
process the driving environment information and the navigation information through the intelligent driving model to obtain a driving decision solution;
control, according to the driving decision solution, the autonomous mobile device to drive;
where the driving decision solution includes at least one of driving route planning, cutting in processing, lane change timing selection, a following distance, a turning speed, and a start-up time interval with a preceding autonomous mobile device.

In a possible implementation, the driving environment information includes motion state information of the autonomous mobile device, motion states of surrounding traffic participants, and road traffic information; and/or
the navigation information includes map information, location information of the autonomous mobile device, and path trajectory information.

FIG. 15 is a schematic structural diagram of a second embodiment of a driving style identification apparatus provided by the present application. On the basis of the embodiment shown in FIG. 14, referring to FIG. 15, the driving style identification apparatus 10 further includes:
a receiving module 13, configured to receive multiple driving styles sent by a server;
a displaying module 14, configured to display the multiple driving styles in a visual interface of an autonomous mobile device.

In a possible implementation, the receiving module 13 is further configured to receive a style description of each driving style sent by the server;
accordingly, the displaying module 14 is specifically configured to:
display the multiple driving styles and the style description corresponding to each driving style in the visual interface of the autonomous mobile device.

In a possible implementation, the receiving module 13 is further configured to receive a style description report of the current user sent by a server; where the style description report includes at least one of: an overtaking probability, traffic efficiency, an acceleration frequency, a lane change frequency, driving smoothness, an average speed, a relative driving indicator, or a personality trait;
the first processing module 12 is further configured to in response to a first uploading operation of the current user, upload the style description report of the current user to a shared cloud platform, where the shared cloud platform is used for interaction between users of a plurality autonomous mobile devices.

In a possible implementation, the first processing module 12 is further configured to in response to a second uploading operation of the current user, upload operation information of the target driving style to a shared cloud platform, where the operation information includes the target driving style and at least one of the following: kilometers traveled, average energy consumption, and operation time for the target driving style.

In a possible implementation, the first processing module 12 is further configured to control the autonomous mobile device to drive according to a new driving style downloaded by the current user from the shared cloud platform, the driving environment information and the navigation information acquired during the movement, and the new driving style.

The driving style identification apparatus provided in the embodiment of the present application can execute the technical solutions shown in the above method embodiments, and the implementation principles and beneficial effects thereof are similar and will not be repeated here.

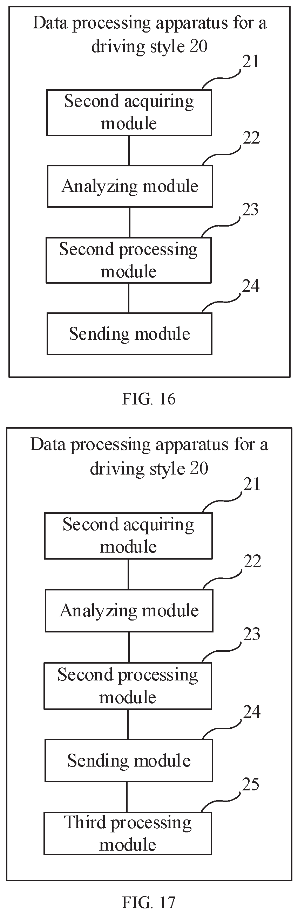

FIG. 16 is a schematic structural diagram of a first embodiment of a data processing apparatus for a driving style provided by the present application. Referring to FIG. 16, the data processing apparatus 20 for the driving style includes:
a second acquiring module 21, configured to acquire driving behavior data of multiple users;
an analyzing module 22, configured to perform a cluster analysis on the driving behavior data of the multiple users to obtain at least one cluster;
a second processing module 23, configured to add corresponding driving style labels to the at least one cluster respectively to determine multiple driving styles;
a sending module 24, configured to send the multiple driving styles to at least one autonomous mobile device.

The data processing apparatus for the driving style provided in the embodiment of the present application can execute the technical solution shown in the above method embodiment, and the implementation principles and beneficial effects thereof are similar and will not be repeated here.

In a possible implementation, the analyzing module 22 is specifically configured to:
for each user, acquire, according to the driving behavior data of the user, a feature vector corresponding to the user, where the feature vector includes at least one piece of data related to the driving style;
perform a cluster analysis on feature vectors of the multiple users to obtain the at least one cluster.

In a possible implementation, the driving style corresponding to any cluster has a corresponding style description, and the style description is used to interpret the driving style;
the sending module 24 is specifically configured to:
send the multiple driving styles and the style description corresponding to each driving style to the at least one autonomous mobile device.

In a possible implementation,
the second acquiring module 21 is further configured to acquire the driving behavior data of a current user sent by the autonomous mobile device;
the second processing module 23 is further configured to determine, based on a preset quantitative indicator, a relative driving indicator of the current user according to the driving behavior data of the multiple users and the driving behavior data of the current user, where the relative driving indicator is used to represent a ranking of the current user among the multiple users;
where the preset quantitative indicator is determined based on a driving behavior of the user in at least one driving scenario of cutting in, starting and stopping, congestion, vehicle following, or turning.

In a possible implementation,
the second acquiring module 21 is further configured to acquire target personality traits corresponding to the multiple driving styles;
the second processing module 23 is further configured to add a target personality trait corresponding to each driving style to the style description corresponding to the driving style.

FIG. 17 is a schematic structural diagram of a second embodiment of a data processing apparatus for a driving style provided by the present application. On the basis of the embodiment shown in FIG. 16, referring to FIG. 17, the data processing apparatus 20 for the driving style further includes:
a third processing module 25, configured to establish, according to personality traits and driving styles of multiple users, a style mapping relationship, where the style mapping relationship includes the target personality trait corresponding to each driving style, and the target personality trait is a personality trait that appears most frequently among users corresponding to the driving style;
accordingly, the second acquiring module 21 is specifically configured to:
   query and acquire the target personality trait corresponding to each driving style based on the style mapping relationship.

In a possible implementation,
the third processing module 25 is further configured to determine, based on a target driving style of the current user and the style mapping relationship, a style description report corresponding to the target driving style of the current user, where the style description report includes at least one of: an overtaking probability, traffic efficiency, an acceleration frequency, a lane change frequency, driving smoothness, an average speed, a relative driving indicator, or a personality trait;
the sending module 24 is further configured to send the style description report of the current user to the autonomous mobile device.

The data processing apparatus of the driving style provided in the embodiment of the present application can execute the technical solution shown in the above method embodiment, and the implementation principles and beneficial effects thereof are similar and will not be repeated here.

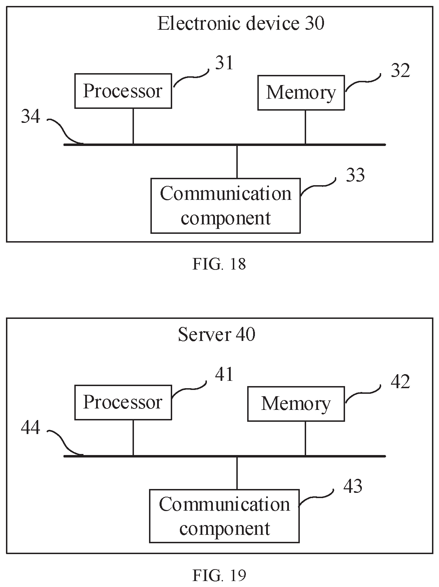

FIG. 18 is a schematic structural diagram of an electronic device provided by an embodiment of the present application. Referring to FIG. 18, the electronic device 30 may include a processor 31, a memory 32, and a communication interface 34. Exemplarily, the processor 31, the memory 32, and the communication interface 34 are interconnected via a bus 33.

The memory 32 stores computer executable instructions;
the processor 31 executes the computer executable instructions stored in the memory 32, causing the processor 31 to perform the driving style processing method provided in the above method embodiment.

The electronic device provided in the embodiment of the present application can execute the technical solutions shown in the above embodiments, and the implementation principles and beneficial effects thereof are similar and will not be repeated here.

An embodiment of the present application provides an autonomous mobile device, including the electronic device shown in FIG. 18, to implement the driving style identification method in the above embodiments, and the implementation principles and beneficial effects thereof are similar and will not be repeated here.

FIG. 19 is a schematic structural diagram of a server provided by an embodiment of the present application. Referring to FIG. 19, the server 40 may include a processor 41, a memory 42, and a communication interface 44. Exemplarily, the processor 41, the memory 42, and the communication interface 44 are interconnected via a bus 43.

The memory 42 stores computer executable instructions;
the processor 41 executes the computer executable instructions stored in the memory 42, causing the processor 41 to perform the data processing method for the driving style provided in the above method embodiment.

The server provided in the embodiment of the present application can execute the technical solution shown in the above method embodiment, and the implementation principles and beneficial effects thereof are similar and will not be repeated here.

An embodiment of the present application provides a computer readable storage medium, having computer executable instructions stored therein, the computer executable instructions, when executed by a processor, are used to implement the methods described in the above method embodiments.

An embodiment of the present application provides a program product, including: a computer program which, when run on a computer, causes the computer to execute the methods described in the above method embodiments.

An embodiment of the present application provides a computer program, the computer program, when executed by a processor, is used to execute the methods described in the above method embodiments.

Those skilled in the art should understand that the embodiments of the present application may be provided as a method, a system, or a computer program product. Therefore, the present application may adopt the form of a complete hardware embodiment, a complete software embodiment, or an embodiment in combination with software and hardware. Moreover, the present application may adopt the form of a computer program product implemented on one or more computer usable storage media (including but not limited to a magnetic disk storage, a CD-ROM, an optical storage, etc.) that contain computer usable program codes.

The present application is described with reference to a flowchart and/or a block diagram of the method, device (system), and computer program product according to the embodiments of the present application. It should be understood that each flow and/or block in the flowchart and/or block diagram, and the combination of the flow and/or block in the flowchart and/or block diagram may be achieved by computer program instructions. These computer program instructions may be provided to a processor of a general-purpose computer, a special-purpose computer, an embedded processing machine or other programmable data processing devices to produce a machine, so that the instructions executed by the processor of the computer or other programmable data processing devices generate an apparatus for achieving the function specified in one flow or multiple flows of the flowchart and/or one block or multiple blocks of the block diagram.

These computer program instructions may also be stored in a computer readable memory that can guide the computer or other programmable data processing devices to work in a specific manner, so that the instructions stored in the computer readable memory generate an article of manufacture including an instruction apparatus that implements the functions specified in one or more flows in the flowchart and/or one or more blocks in the block diagram.

These computer program instructions may also be loaded onto the computer or other programmable data processing device so that a series of operating steps are executed on the computer or other programmable devices to generate a computer-implemented process, so that the instructions executed on the computer or other programmable devices provide steps for implementing the functions specified in one or more flows in the flowchart and/or one or more blocks in the block diagram.

In a typical configuration, a computing device includes one or more processors (CPUs), input/output interfaces, network interfaces, and memory.

The memory may include the form of non-permanent storage, a random access memory (RAM) and/or a non-volatile memory in a computer readable medium, such as a read-only memory (ROM) or a flash RAM. The memory is an example of the computer readable medium.

The computer readable medium includes permanent and non-permanent, removable and non-removable medium that may be used to store information through any method or technology. The information may be computer readable instructions, data structures, program modules, or other data. Examples of the computer storage medium include, but is not limited to, a phase change memory (PRAM), a static random access memory (SRAM), a dynamic random access memory (DRAM), other types of random access memory (RAM), read-only memory (ROM), electrically erasable programmable read-only memory (EEPROM), flash memory or other memory technologies, a compact disc read-only memory (CD-ROM), a digital versatile disc (DVD) or other optical storage, magnetic tapes, disk storage or other magnetic storage devices, or any other non-transmission media that may be used to store information that can be accessed by the computing device. As defined herein, the computer readable medium does not include transitory computer readable media (transitory media) such as modulated data signals and carrier waves.

It should be noted that, in this description, the terms "include", "comprise" or any other variants thereof are intended to cover non-exclusive inclusion, so that a process, method, object or device including a series of elements not only includes those elements, but also includes other elements that are not explicitly listed, or include elements inherent to the process, method, object, or device. In a case that there are no more restrictions, the element defined by the sentence "including a..." does not exclude the existence of other same elements in the process, method, object, or device that includes the element.

The above is merely embodiments of the present application and are not intended to limit the present application. For those skilled in the art, the present application may have various changes and variations. Any modifications, equivalent substitutions, improvements, etc. made within the spirit and principle of the present application should all be included within the scope of the claims of the present application.

## Claims

1. A driving style identification method, which is applied to an autonomous mobile device, wherein the method comprises:
identifying, based on historical driving behavior data of a current user, a target driving style of the current user from multiple driving styles, wherein the multiple driving styles are obtained based on a cluster analysis of driving behavior data of multiple users; and
controlling, according to the target driving style, and driving environment information and navigation information acquired during a movement, the autonomous mobile device to drive.

2. The method according to claim 1, wherein the identifying, based on the historical driving behavior data of the current user, the target driving style of the current user from the multiple driving styles comprises:
determining, according to the historical driving behavior data, a historical feature vector;
acquiring driving feature vectors respectively corresponding to the multiple driving styles;
performing, according to the historical feature vector, matching processing among the driving feature vectors respectively corresponding to the multiple driving styles to determine the target driving style.

3. The method according to claim 2, wherein the determining, according to the historical driving behavior data, the historical feature vector comprises:
performing, based on a preset quantitative indicator and/or a preset feature processing model, feature extraction on the historical driving behavior data to obtain the historical feature vector;
wherein the preset quantitative indicator is determined based on driving behaviors of the multiple users in at least one driving scenario of cutting in, starting and stopping, congestion, vehicle following, or turning; wherein the preset feature processing model is used to perform feature extraction on driving behavior data of a user to obtain a feature vector.

4. The method according to claim 3, wherein the performing, based on the preset quantitative indicator and/or the preset feature processing model, feature extraction on the historical driving behavior data to obtain the historical feature vector comprises:
performing, based on the preset quantitative indicator, feature extraction on the historical driving behavior data to obtain a first historical feature vector, and determining the first historical feature vector as the historical feature vector; or,
performing, based on the preset feature processing model, feature extraction on the historical driving behavior data to obtain a second historical feature vector, and determining the second historical feature vector as the historical feature vector; or,
performing, based on the preset quantitative indicator, feature extraction on the historical driving behavior data to obtain a first historical feature vector; performing, based on the preset feature processing model, feature extraction on the historical driving behavior data to obtain a second historical feature vector; and performing concatenation processing on the first historical feature vector and the second historical feature vector to obtain the historical feature vector.

5. The method according to any one of claims 1 to 4, wherein the controlling, according to the target driving style, and the driving environment information and the navigation information acquired during the movement, the autonomous mobile device to drive comprises:
configuring the target driving style in an intelligent driving model of the autonomous mobile device;
processing the driving environment information and the navigation information through the intelligent driving model to obtain a driving decision solution;
controlling, according to the driving decision solution, the autonomous mobile device to drive;
wherein the driving decision solution comprises at least one of driving route planning, cutting in processing, lane change timing selection, a following distance, a turning speed, or a start-up time interval with a preceding autonomous mobile device.

6. The method according to any one of claims 1 to 5, wherein the driving environment information comprises motion state information of the autonomous mobile device, motion states of surrounding traffic participants, and road traffic information; and/or
wherein the navigation information comprises map information, location information of the autonomous mobile device, and path trajectory information.

7. The method according to any one of claims 1 to 6, wherein the method further comprises:
receiving the multiple driving styles sent by a server;
displaying the multiple driving styles in a visualization interface of the autonomous mobile device.

8. The method according to claim 7, wherein the method further comprises:
receiving a style description of each driving style sent by the server;
accordingly, the displaying the multiple driving styles in the visualization interface of the autonomous mobile device comprises:
displaying the multiple driving styles and the style description corresponding to each driving style in the visual interface of the autonomous mobile device.

9. The method according to any one of claims 1 to 8, wherein the method further comprises:
receiving a style description report of the current user sent by a server; wherein the style description report comprises at least one of: an overtaking probability, traffic efficiency, an acceleration frequency, a lane change frequency, driving smoothness, an average speed, a relative driving indicator, or a personality trait;
in response to a first uploading operation of the current user, uploading the style description report of the current user to a shared cloud platform, wherein the shared cloud platform is used for interaction between users of a plurality of autonomous mobile devices.

10. The method according to any one of claims 1 to 9, wherein the method further comprises:
in response to a second uploading operation of the current user, uploading operation information of the target driving style to a shared cloud platform, wherein the operation information comprises the target driving style and at least one of the following: kilometers traveled, average energy consumption, and operation time for the target driving style.

11. The method according to claim 9 or 10, wherein the method further comprises:
controlling the autonomous mobile device to drive according to a new driving style downloaded by the current user from the shared cloud platform, the driving environment information and the navigation information acquired during the movement, and the new driving style.

12. A data processing method for a driving style, comprising:
acquiring driving behavior data of multiple users;
performing a cluster analysis on the driving behavior data of the multiple users to obtain at least one cluster;
adding corresponding driving styles to the at least one cluster respectively to determine multiple driving styles; and
sending the multiple driving styles to at least one autonomous mobile device.

13. The method according to claim 12, wherein the performing the cluster analysis on the driving behavior data of the multiple users to obtain at least one cluster comprises:
for each user, acquiring, according to the driving behavior data of the user, a feature vector corresponding to the user, wherein the feature vector comprises at least one piece of data related to a driving style;
performing the cluster analysis on feature vectors of the multiple users to obtain the at least one cluster.

14. The method according to any one of claim 12 or 13, wherein the driving style corresponding to any cluster has a corresponding style description, and the style description is used to interpret the driving style;
wherein the sending the multiple driving styles to the at least one autonomous mobile device comprises:
sending the multiple driving styles and the style description corresponding to each driving style to the at least one autonomous mobile device.

15. The method according to any one of claims 12 to 14, wherein the method further comprises:
acquiring driving behavior data of a current user sent by the autonomous mobile device;
determining, based on a preset quantitative indicator, a relative driving indicator of the current user according to the driving behavior data of the multiple users and the driving behavior data of the current user, wherein the relative driving indicator is used to represent a ranking of the current user among the multiple users;
wherein the preset quantitative indicator is determined based on a driving behavior of the user in at least one driving scenario of cutting in, starting and stopping, congestion, vehicle following, or turning.

16. The method according to claim 14, wherein the method further comprises:
acquiring target personality traits corresponding to the multiple driving styles;
adding a target personality trait corresponding to each driving style to the style description corresponding to the driving style.

17. The method according to claim 16, wherein the method further comprises:
establishing, according to personality traits and driving styles of the multiple users, a style mapping relationship, wherein the style mapping relationship comprises the target personality trait corresponding to each driving style, and the target personality trait is a personality trait that appears most frequently among users corresponding to the driving style;
accordingly, the acquiring the target personality traits corresponding to the multiple driving styles comprises:
querying and acquiring the target personality trait corresponding to each driving style based on the style mapping relationship.

18. The method according to claim 17, wherein the method further comprises:
determining, based on a target driving style of the current user and the style mapping relationship, a style description report corresponding to the target driving style of the current user, wherein the style description report comprises at least one of: an overtaking probability, traffic efficiency, an acceleration frequency, a lane change frequency, driving smoothness, an average speed, a relative driving indicator, or a personality trait;
sending the style description report of the current user to the autonomous mobile device.

19. A driving style identification apparatus, comprising:
a first acquiring module, configured to identify, based on historical driving behavior data of a current user, a target driving style of the current user from multiple driving styles, wherein the multiple driving styles are obtained based on a cluster analysis of driving behavior data of multiple users;
a first processing module, configured to control, according to the target driving style, and driving environment information and navigation information acquired during a movement, the autonomous mobile device to drive.

20. A data processing apparatus for a driving style, comprising:
a second acquiring module, configured to acquire driving behavior data of multiple users;
an analyzing module, configured to perform a cluster analysis on the driving behavior data of the multiple users to obtain at least one cluster;
a second processing module, configured to add corresponding driving style labels to the at least one cluster respectively to determine multiple driving styles;
a sending module, configured to send the multiple driving styles to at least one autonomous mobile device.

21. An electronic device, comprising: a processor, a memory, and a communication interface; wherein
the memory stores computer executable instructions; and
the processor executes the computer executable instructions stored in the memory to implement the method according to any one of claims 1 to 11.

22. An autonomous mobile device, comprising: the electronic device according to claim 21.

23. A server, comprising: a processor, a memory, and a communication interface; wherein
the memory stores computer executable instructions; and
the processor executes the computer executable instructions stored in the memory to implement the method according to any one of claims 12 to 18.

24. A computer readable storage medium, having computer executable instructions stored therein, wherein the computer executable instructions, when executed by a processor, are used to implement the method according to any one of claims 1 to 18.

25. A program product, comprising: a computer program which, when run on a computer, causes the computer to execute the method according to any one of claims 1 to 18.

26. A computer program, which, when executed by a processor, is used to execute the method according to any one of claims 1 to 18.
